# EUROPEAN PATENT APPLICATION

(11) **EP 4 488 904 A1**
(43) Date of publication of application: **08.01.2025**
(21) Application number: 23784738.9
(22) Date of filing: 03.04.2023
(51) Int. Cl.: G06Q 10/0833, B65G 61/00, G16Y 10/00

(54) **ANALYSIS/MONITORING SYSTEM EMPLOYING DETECTOR**

(30) Priority: 05.04.2022 JP 2022062930
(71) Applicant: Kyocera Communication Systems Co. Ltd., Kyoto-shi, Kyoto 612-8450 (JP); UNABIZ, 31670 Labège (FR)
(72) Inventor: NAGAI, Yoshiaki, Kyoto-shi, Kyoto 612-8450 (JP); KAWAI, Naoki, Kyoto-shi, Kyoto 612-8450 (JP); IKEGAMI, Mai, Kyoto-shi, Kyoto 612-8450 (JP); WITNAUER, Nicolas, 31670 Labege (FR)
(74) Representative: Von Rohr Patentanwälte Partnerschaft mbB
(86) International application number: PCT/JP2023/013840
(87) International publication number: WO 2023/195452

(57) **Abstract**

To provide a highly useful analysis system, a detection sheet body 210 is attached to a shipment. At the time of shipping, first sheet wiring 206 of the detection sheet body 210 is broken. As a result, shipping data are transmitted from a wireless transmission circuit 203 of the detection sheet body 210. The shipping data are recorded in a management server device 11. A recipient who accepts the shipment breaks second sheet wiring 207 of the detection sheet body 210. As a result, opening data are transmitted from the wireless transmission circuit 203 of the detection sheet body 210. The opening data are recorded in a management server device 10. Therefore, a user can acquire shipping and opening statuses by accessing the management server device 10 from the terminal device 30, and can make use of the same in a production plan or shipping plan.

## Description

### TECHNICAL FIELD

The present invention relates to a system for analyzing/monitoring a route, a usage status, presence/absence of opening, and the like of a target object by using a detector.

### BACKGROUND ART

A system for monitoring whether a shipment is delivered through a correct route has been proposed. For example, the following system is disclosed in Japanese Patent Unexamined Application Publication 2021-012715. In the system, an ID node including a wireless transmitter is attached to the shipment, and a location thereof is detected in order to detect a route and arrival thereof at a destination.

Such a system allows to detect the route including a current status of the shipment and acknowledge a shipping status. It can be said that this system is particularly useful for carriers.

In addition, the following system is disclosed in Japanese Patent Unexamined Application Publication No. 2021-124838. In the system, a content is wrapped in a package, presence or absence of the content is determined by a capacitance sensor, and a determination result is transmitted to a server device via wireless communication. A user can access the server device via the Internet to find out whether the package has been opened and the content has been taken out.

### SUMMARY OF THE INVENTION

### Problem to be Solved by the Invention

However, the conventional opening detection technique as described above has the following problems.

By the technique disclosed in Japanese Patent Unexamined Application Publication 2021-012715, it is possible to find out the current status of the shipment. However, such a technique cannot be used for a measure that takes into account whether a product shipped by a manufacturer or the like is used by the user. Similarly, the same technique cannot be used to analyze a degree of an effect of an advertisement such as a direct mail on the user.

Meanwhile, the technique disclosed in Japanese Patent Unexamined Application Publication No. 2021-124838 can be used to determine whether the shipment or the like has been opened, but cannot be used to determine whether the shipment has been opened by an unauthorized third party. In addition, the technique disclosed in Japanese Patent Unexamined Application Publication No. 2021-124838 cannot be used to determine whether a person who has entered an unoccupied house or the like is not an owner but the unauthorized third party as an intruder.

An object of the present invention is to solve any of the problems as described above and provide a further effective analysis system and monitoring system.

### Problem to be Solved by the Invention

Several features of the present invention, each of which is independently applicable, will be listed.

(1)(2)(6)(10)(11) A system for analyzing distribution and use of a shipped product in accordance with the present invention, the system comprising: a server device; and a terminal device, wherein the server device includes: detector/product correspondence recording means that associates an identification code of a detector attached to the product with an identification code of the product and records the identification codes in a recording unit; shipping information recording means that detects and associates a location of the detector, to which a shipping input is given at the time of shipping the product, with a date and time and the identification code of the detector, and records these pieces of information as shipping information in the recording unit; route information recording means that detects a location of the detector, which is attached to the product, on the basis of a signal from the detector after shipping, associates the location of the detector with a date and time and the identification code of the detector, and records these pieces of information as route information in the recording unit; usage information recording means that detects a location of the detector, to which a usage input is given, at the time of using the product, associates the location of the detector with a date and time and the identification code, and records these pieces of information as usage information in the recording unit; and information transmitting means that transmits, to the terminal device, the shipping information, the route information, and the usage information recorded in the recording unit, and the terminal device includes: information receiving means that receives the shipping information, the route information, and the usage information transmitted from the server device by a receiving unit; and analyzing means that calculates a time period from the shipping date and time to the usage date and time, the number of the products on a distribution route, or the number of the products used by a user on the basis of the shipping information, the route information, and the usage information received from the server device.

Accordingly, the system can be constructed such that distribution status of products can be analyzed.

(3)(7)(12) In the analyzing system in accordance with the present invention, wherein the analyzing means calculates a production plan or a shipping plan of the product on the basis of the time period from the shipping date and time to the usage date and time, the number of the products on the distribution route, or the number of the products used by the user.

Accordingly, appropriate production and shipping planning can be calculated.

(4)(8)(13) In the analyzing system in accordance with the present invention, wherein the analyzing means calculates a scheduled advertising volume of the product per region on the basis of the number of the usage, which is acquired by collecting locations of usage by the users per region.

Accordingly, the scheduled advertising volume (such as advertising quantity per given period (one day for example) and total amount of advertising) by region can be properly determined.

(5)(9)(14) In the analyzing system in accordance with the present invention, the system being configured to: include a detector, which differs from the detector attached to the product and is attached to a container accommodating a plurality of the products; starts tracking processing at the time of shipping at which the shipping input is given to the detector attached to the container accommodating the plurality of the products; and start the tracking processing by the detector attached to the product when the container accommodating the plurality of the products is opened.

Accordingly, it can be achieved to track products that are shipped in multiple units and then subdivided during the distribution channel.

(15)(16)(18)(29)(21) A system for measuring an information transmission effect of a sealed letter that encloses information in accordance with the present invention, the system comprising: a server device; and a terminal device, wherein the server device includes: detector/information correspondence recording means that associates an identification code of a detector attached to the sealed letter with an identification code of the sealed letter and records the identification codes in a recording unit; dispatch information recording means that detects a location of the detector on the basis of a signal from the detector, which is activated at the time of dispatching the sealed letter, associates the location of the detector with a date and time and the identification code of the detector, and records these pieces of information as dispatch information in the recording unit; opening information recording means that detects a location of the detector, to which an opening input is given, at the time of opening the sealed letter, associates the location of the detector with a date and time and the identification code of the detector, and records these pieces of information as opening information in the recording unit; and information transmitting means that transmits the shipping information and the opening information recorded in the recording unit by a transmitting unit, and the terminal device includes: presence or absence of reaction acquiring means that acquires presence or absence of a reaction to the information enclosed in the sealed letter; information receiving means that receives the shipping information and the opening information transmitted from the server device by a receiving unit; and effect measuring means that calculates a ratio of the number of the opened sealed letters to the number of the mailed sealed letters or a ratio of the presence of the reaction on the basis of the dispatch information and the opening information received from the server device and the presence or the absence of the reaction acquired by the presence or absence of reaction acquiring means.

Accordingly, information transmission effect can be calculated appropriately.

(17)(19)(22) In the system in accordance with the present invention, the effect measuring means calculates effect information per region, which is indicated by a location where the sealed letter is opened.

(23)-(27) A monitoring system for monitoring unauthorized intrusion into a house in accordance with the present invention, the monitoring system comprising: a server device; and a mobile terminal device, wherein the server device includes: start information acquiring means that acquires vacant house start information including an identification code of a detector attached to an opened/closed body and activated when a user leaves the house; and opening information transmitting means that acquires the identification code and a location of the detector detecting that the opened/closed body has been opened, and transmits these pieces of information as opening information to the mobile terminal device, and the mobile terminal device includes: receiving means that receives the opening information from the server device; and abnormality notifying means that determines whether the location of the detector as a target of the opening information and a location of the mobile terminal device at the time of the opening information are within a predetermined range, and makes an abnormality notification when the locations are not within the predetermined range.

Accordingly, unauthorized intrusion into a house can be monitored.

(28)(29)(31)(33)(34) A system for monitoring unauthorized opening of a shipment in accordance with the present invention, the system comprising: a server device; and a terminal device, wherein the server device includes: detector/shipment correspondence recording means that associates an identification code of a detector attached to a portion to be opened of the shipment with an identification code of the product and records the identification codes in a recording unit; dispatch information recording means that detects a location of the detector on the basis of a signal from the detector, which is activated at the time of dispatching the shipment, associates the location of the detector with a date and time and the identification code of the detector, and records these pieces of information as dispatch information in the recording unit; and information transmitting means that transmits opening information to the terminal device by a transmitting unit when receiving the opening information including a location of the detector detecting that the portion to be opened of the shipment has been opened, the date and time, and the identification code of the detector, and the terminal device includes: monitoring means that outputs a location at the time of opening on the basis of the opening information received from the server device in order to determine whether the unauthorized opening has occurred.

Accordingly, monitoring unauthorized opening of a shipment can be monitored. (30)(32)(35) In the system for monitoring unauthorized opening of a shipment in accordance with the present invention, the monitoring means outputs a warning of the unauthorized opening when a distance between a scheduled shipment receiving location, which is recorded in advance, and the location where the opening has been detected is longer than a predetermined distance.

Accordingly, warning can be issued.
(a) A detection sheet body according to the present invention includes: a wireless transmission circuit that is provided on a breakable thin board to transmit a status signal to a mobile communication base station; a control circuit that is provided on the thin board, controls and causes the wireless transmission circuit to transmit a state signal indicating shipping according to a voltage applied to a first terminal, and controls and causes the wireless transmission circuit to transmit a state signal indicating opening according to a voltage applied to a second terminal; a battery cell that is provided on the thin board to supply the voltage to the wireless transmission circuit and the control circuit; first sheet wiring that is provided on the thin board to connect the first terminal and the battery cell; second sheet wiring that is provided on the thin board to connect the second terminal and the battery cell; a first breaking structure that is provided to the thin board in order to fluctuate the voltage of the first terminal by cutting the first sheet wiring; and a second breaking structure that is provided to the thin board in order to fluctuate the voltage of the second terminal by cutting the second sheet wiring.
   Therefore, it is possible to detect shipping and opening with a simple operation. In addition, since the detection is made by physical breakage, it is easy to grasp a condition from external appearance.
(b) The detection sheet body according to the present invention is characterized in that, the thin board is paper, each of the first sheet wiring and the second sheet wiring is printed wiring that is formed by printing on the paper, and each of the first breaking structure and the second breaking structure is a perforation line provided to the paper or the printed wiring.
   Therefore, special equipment is unnecessary to break the breaking structure, which facilitate handling.
(c) The detection sheet body according to the present invention is characterized in that, the printed wiring is formed near the perforation line in a manner to be wide in an extending direction of the perforation line.

Therefore, there is less risk that the perforation line reduces conductivity of the printed wiring.
(d) In the detection sheet body according to the present invention, a perforation line structure as the first breaking structure and a perforation line structure as the second breaking structure are provided in different directions, and the perforation line structure as the second breaking structure is configured that at least one end thereof does not reach an edge of the paper but reaches a new edge that is formed by removing a part of the paper by the perforation line structure as the first breaking structure.

Therefore, the second breaking structure is less likely to be broken, and it is thus possible to easily acknowledge occurrence of such erroneous use that a package is shipped without the first breaking structure being broken.
(e) In an envelope according to the present invention, the detection sheet body is fixed such that the breaking structure for opening overlaps the perforation line structure as the second breaking structure of the detection sheet body.

Therefore, at the time of opening the envelope, the second breaking structure is broken simultaneously, and it is thus possible to detect opening.
(f) In a container according to the present invention, the detection sheet body is fixed such that, when a lid is opened, the perforation line structure as the second breaking structure of the detection sheet body is broken.

Therefore, at the time of opening the container, the second breaking structure is broken simultaneously, and it is thus possible to detect opening.
(g) The detection sheet body according to the present invention is characterized in that, each of the first terminal and the second terminal is a hardware interrupt terminal, and the control circuit only monitors the hardware interrupt terminal until a predetermined signal is input to the hardware interrupt terminal.

Therefore, long-time operation can be achieved by suppressing drainage of the battery cell.
(h) The detection sheet body according to the present invention is characterized in that, in a period from transmission of the state signal indicating shipping to transmission of at least the state signal indicating opening, the control circuit controls and causes the wireless transmission circuit to transmit, at predetermined time intervals, a state signal indicating that the detection sheet body is operated.

Therefore, it is possible to check whether the detection sheet body is operated properly after shipping.
(i) The detection sheet body according to the present invention is characterized in that, in a period from transmission of the state signal indicating shipping to transmission of at least the state signal indicating opening, the control circuit controls and causes the wireless transmission circuit to transmit, at predetermined time intervals, a state signal that is used to estimate a current location of the detection sheet body.

Therefore, after shipping, it is possible to acknowledge at which location the detection sheet body is present.
(j) The detection sheet body according to the present invention is characterized in that, the detection sheet body further includes a sensor that measures environment around the detection sheet body, and in a period from transmission of the state signal indicating shipping to transmission of at least the state signal indicating opening, the control circuit controls and causes the wireless transmission circuit to transmit, at predetermined time intervals, a state signal indicating a measurement result by the sensor.

Therefore, it is possible to detect surrounding environment during shipping.
(k) A state detection system according to the present invention includes: a detection sheet body that is accommodated in or fixed to a container and has a wireless transmission circuit; and a server apparatus capable of directly or indirectly acquiring a state signal from the wireless communication circuit, in which
the detection sheet body includes: the wireless transmission circuit that is provided on a breakable thin board to transmit a status signal to a mobile communication base station; a control circuit that is provided on the thin board, controls and causes the wireless transmission circuit to transmit a state signal indicating shipping according to a voltage applied to a first terminal, controls and causes the wireless transmission circuit to transmit a state signal indicating opening according to a voltage applied to a second terminal, and controls and causes the wireless transmission circuit to transmit, at predetermined time intervals, a state signal used to estimate a current location of the detection sheet body in a period from transmission of the state signal indicating shipping to transmission of at least the state signal indicating opening; a battery cell that is provided on the thin board to supply the voltage to the wireless transmission circuit and the control circuit; first sheet wiring that is provided on the thin board to connect the first terminal and the battery cell; second sheet wiring that is provided on the thin board to connect the second terminal and the battery cell; a first breaking structure that is provided to the thin board in order to fluctuate the voltage of the first terminal by cutting the first sheet wiring; and a second breaking structure that is provided to the thin board in order to fluctuate the voltage of the second terminal by cutting the second sheet wiring, and
the server apparatus includes: shipping recording means for receiving the state signal indicating shipping and recording, in a recording section, that the detection sheet body is in a shipped state in association with the detection sheet body along with date and time; transportation recording means for recording, in the recording section, that the detection sheet body is in a transported state in association with the detection sheet body along with a current location, which is based on a state signal used to estimate the current location, and the date and time in a period from reception of the state signal indicating shipping to reception of the state signal indicating opening; opening recording means for receiving the state signal indicating opening and recording, in the recording section, that the detection sheet body is in an opened state in association with the detection sheet body along with the date and time; and transmission means for transmitting a state of the detection sheet body recorded in the recording section to a terminal apparatus.

Therefore, it is possible to detect time of shipping, the current location, and time of opening with a simple operation.
"detector/product correspondence recording means" may correspond to step S151 in the embodiment.
"shipping information recording means" may correspond to step S52 in the embodiment.
" route information recording means" may correspond to step S53 in the embodiment.
"usage information recording means" may correspond to step S54 in the embodiment.
"detector/information correspondence recording means" may correspond to step S151 in the embodiment.
"effect measuring means" may correspond to step S205 in the embodiment.
"abnormality notifying means" may correspond to step S62 and S63 in the embodiment.
"monitoring means" may correspond to step S66 and S67 in the embodiment.

A "device" is a concept that includes not only one computer but also plural computers connected via a network or the like. Thus, in the case where the means (or even some of the means) of the present invention is distributed across the plural computers, these plural computers correspond to the device.

A "program" is a concept that includes not only a program directly executable by a CPU but also a source program, a compressed program, an encrypted program, a program whose function is implemented in cooperation with an operating system, and the like.

### BRIEF DESCRIPTION OF DRAWINGS

FIG. 1 illustrates a functional configuration of an analysis system according to a first embodiment of the present invention.
FIG. 2 is a view illustrating contents of an analysis performed by the analysis system.
FIG. 3 is a system configuration view of the analysis system.
FIG. 4 illustrates a hardware configuration of a management server device 10.
FIG. 5 illustrates a hardware configuration of a control circuit of a detection sheet body 210.
FIG. 6 is a view illustrating a wireless pattern of the detection sheet body 210.
FIG. 7 is a circuit diagram of the detection sheet body 210.
FIG. 8 is a plan view of a container 41 that is used when a product is shipped.
FIG. 9 is a flowchart executed when the detection sheet body 210 is tested.
FIG. 10 includes tables, each of which illustrates a structure of transmission data.
FIG. 11 is a view illustrating location detection using LPWA radio waves.
FIG. 12 includes tables, each of which illustrates recorded status data.
FIG. 13 is a flowchart of state detection processing.
FIG. 14 is a flowchart of the state detection processing.
FIG. 15 is a flowchart of the state detection processing.
FIG. 16 is a table illustrating the recorded state data.
FIG. 17 is a table illustrating the recorded state data.
FIG. 18 is a view illustrating a structure of the detection sheet body 210 according to another example.
FIG. 19 includes views, each of which illustrates attachment of the detection sheet body 210 to a cardboard box.
FIG. 20 is a view illustrating a structure of the detection sheet body 210 according to further another example.
FIG. 21 illustrates a functional configuration of an information transmission effect measurement system according to a second embodiment.
FIG. 22 is a view illustrating a state of attaching the detection sheet body 210 to a sealed letter 270.
FIG. 23 is a view illustrating a flowchart of effect measurement.
FIG. 24 illustrates a functional configuration of an unauthorized intrusion monitoring system according to a third embodiment.
FIG. 25 is a flowchart of unauthorized intrusion monitoring.
FIG. 26 is a flowchart of the unauthorized intrusion monitoring.
FIG. 27 illustrates a functional configuration of an unauthorized opening monitoring system according to a fourth embodiment.
FIG. 28 is a flowchart of unauthorized opening monitoring.
FIG. 29 is a flowchart of the unauthorized opening monitoring.

### DESCRIPTION OF EMBODIMENTS

### 1. FIRST EMBODIMENT

### 1.1 Functional Configuration

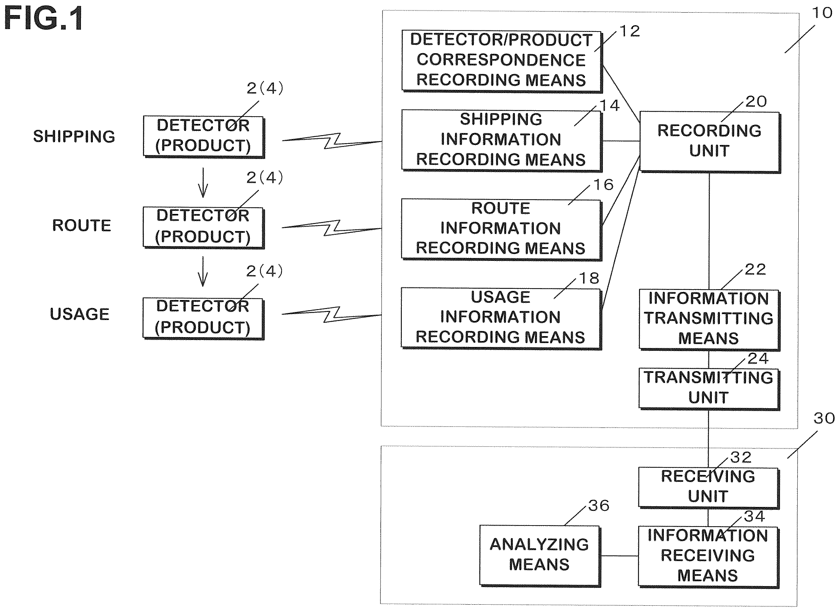

FIG. 1 illustrates a functional configuration of an analysis system according to an embodiment of the present invention. This system includes a detector 2 attached to a product 4, a server device 10, and a terminal device 30.

The detector 2 emits a radio wave such as LPWA by itself and thus can acquire a location thereof at a base station or the like that receives the radio wave. Alternatively, like a GPS receiver, the detector 2 may be configured to calculate the location thereof by receiving radio waves from plural satellites and transmit the calculated location.

Detector/product correspondence recording means 12 of the server device 10 associates an identification code of the detector 2 attached to each of the products 4 with an identification code for identifying the respective product, and records the identification codes in a recording unit 20.

When this product 4 is shipped, shipping input is given to the detector 2. Shipping information recording means 14 acquires a date and time, the location of the detector 2, and the identification codes at the time when the shipping input is given, and records these pieces of information as shipping information in the recording unit 20.

In regard to the product 4 that has been shipped out and is on a route to a wholesaler, a dealer, or the like, route information recording means 16 acquires a date and time, the location of the detector 2, and the identification codes at predetermined intervals, and records these pieces of information as route information in the recording unit 20.

When the product 4 arrives at a user, and the user attempts to use the product 4, usage input is given to the detector 2. For example, the usage input is given to the detector 2 when a circuit is disconnected or switched on by opening a bag or a box that accommodates the product. Usage information recording means 18 acquires a date and time, the location of the detector 2, and the identification codes at the time when the usage input is given, and records these pieces of information as usage information in the recording unit 20.

Information transmitting means 22 transmits the shipping information, the route information, and the usage information described above to the terminal device 30 by a transmitting unit 24.

Information receiving means 34 of the terminal device 30 receives the shipping information, the route information, and the usage information by a receiving unit 32. Analyzing means 36 calculates a period from the shipping date and time to the usage date and time, the number of the products on the distribution route, and the number of the products used by the users on the basis of the shipping information, the route information, and the usage information. The calculated information is used to create a production plan and a shipping plan of the products, for example.

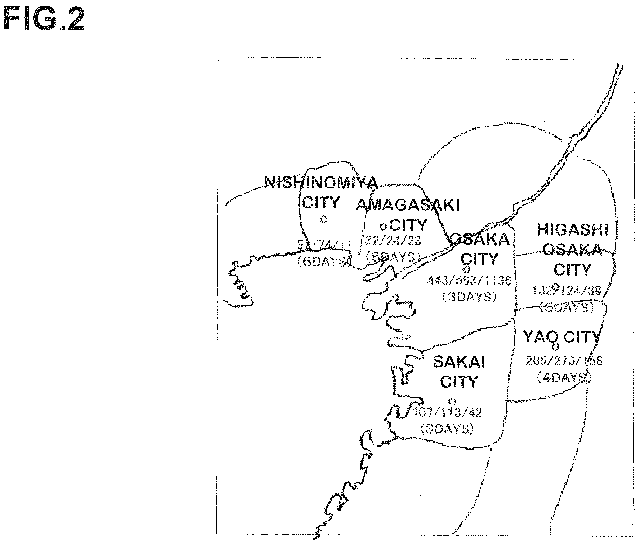

FIG. 2 schematically illustrates an example of an analysis by the analyzing means 36. Each circle on a map indicates a local dealer. In each municipality, the single dealer sells this automobile part (product) to repair shops as the users. In FIG. 2, in regard to numbers a/b/c shown under each local dealer, c indicates a quantity of current stock of the parts at the respective dealer, b indicates the number of the parts that have been shipped from the dealer within one month, and a indicates the number of the parts, which have been actually used at the repair shops, of the number of the shipped parts b. In addition, each number in a parenthesis () indicates average required days for the product to arrival at the dealer from a factory.

Each of the above numerical values can be calculated by recording locations of the repair shops and the dealers in advance and on the basis of the number of the parts present at each location, the number of the used parts, the shipping date and time, and the arrival date and time at each dealer. The terminal device 30 uses these numerical values to determine a shipping volume to each dealer in consideration of a predicted use volume based on a use trend of the parts, the quantity of current stock, a quantity of safe stock, and the average required days. The terminal device 30 also creates the production plan on the basis of a sum of the shipping volumes to the dealers.

### 1.2 System Configuration and Hardware Configuration

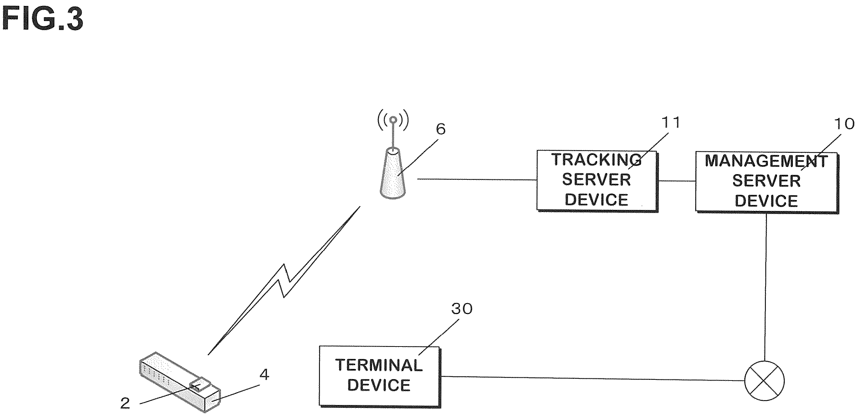

FIG. 3 illustrates an example of a system configuration of the analysis system. The part 4 as the product is accommodated in the box, and the detector 2 is affixed to a portion for opening the box. When the part 4 is shipped, the shipping input is given to the detector 2. In this way, the detector 2 transmits the radio wave such as the LPWA.

At this time, a person in charge at a part manufacturer associates the identification code of the part 4 with the identification code of the detector 2 and enters the identification codes on the terminal device 30. In this embodiment, each of the parts 4 and each of the detectors 2 has a unique identification code allowing identification thereof. However, the same identification code may be provided to the same type of the products (produced at the same time).

The input identification code of the part 4 and the identification code of the detector 2 attached to the product are associated with each other, transmitted to a management server device 10, and recorded therein.

The radio wave from the detector 2, to which the shipping input has been given, is received by a base station 6. Then, the location of the detector 2 is detected by a tracking server device 11 and transmitted, with the identification code of the detector 2, to the management server device 10. The management server device 10 acquires and records the information as the shipping information.

After shipping, the detector 2 attached to the part 4 transmits the radio wave at predetermined time intervals. This radio wave is received by the base station 6. Then, the location of the detector 2 is detected by the tracking server device 11 and transmitted, with the identification code of the detector 2, to the management server device 10. The management server device 10 acquires and records the information as the route information. Thus, a transportation route, information on which wholesaler the detector 2 has gone through, and the like are recorded.

When the part 4 reaches the repair shop as the user and is opened by the user, the usage input is given to the detector 2 by switching on or electrode breakage, and the radio wave is transmitted.

The radio wave from the detector 2, to which the usage input has been given, is received by the base station 6. Then, the location of the detector 2 is detected by the tracking server device 11 and transmitted, with the identification code of the detector 2, to the management server device 10. The management server device 10 acquires and records the information as the usage information.

The shipping information, the route information, and the usage information are transmitted from the management server device 10 to the terminal device 30 and used for the production plan and the shipping plan on the basis of the number of the products on the distribution route, the number of the used products, and a time period from shipping to usage.

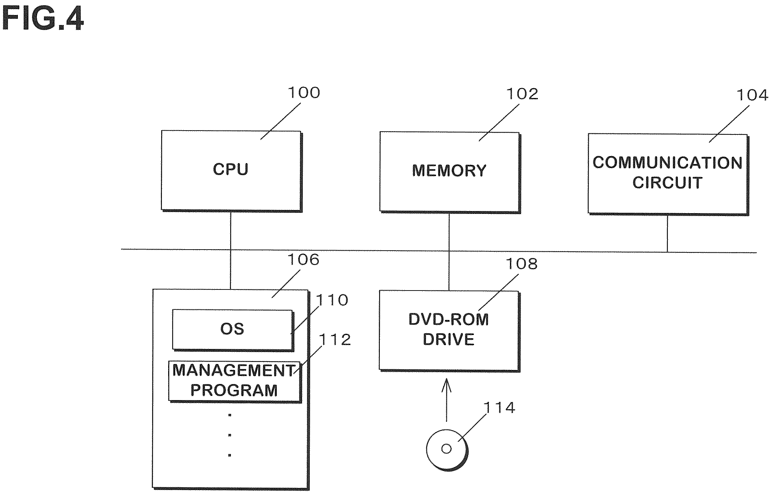

FIG. 4 illustrates a hardware configuration of the management server device 10. Memory 102, a communication circuit 104, an SSD 106, and a DVD-ROM drive 108 are connected to a CPU 100. The communication circuit 104 is a circuit for connecting to the Internet.

The SSD 106 records an operating system 110 and a management program 112. The management program 112 cooperates with the operating system 110 to implement a function thereof. These programs are recorded in a DVD-ROM 114 and installed in the SSD 106 via the DVD-ROM drive 108.

The tracking server device 11 has substantially the same hardware configuration. In this embodiment, a server device provided by Sigfox S.A. on the Internet is used as the tracking server device 11.

A normal PC connectable to the Internet can be used as the terminal device 30. Although the basic configuration is the same as that in FIG. 4, the terminal device 30 preferably includes a display, a mouse/keyboard, and the like.

The detector 2 can be of any type as long as the shipping input and the usage input can be given thereto by a switch or the like, and the location thereof can be identified by transmitting the wireless radio wave, the GPS, or the like. For example, the detector 2 may be an IC tag.

In this embodiment, a detection sheet body 210 as described below is used as the detector 2. The detection sheet body 210 is formed by printing a circuit pattern on paper or the like with conductive ink and has a wireless transmission circuit and a control circuit. In addition, the detection sheet body 210 has a breaking structure such as a perforation line. When the printed pattern is cut, the shipping input or the usage input is given.

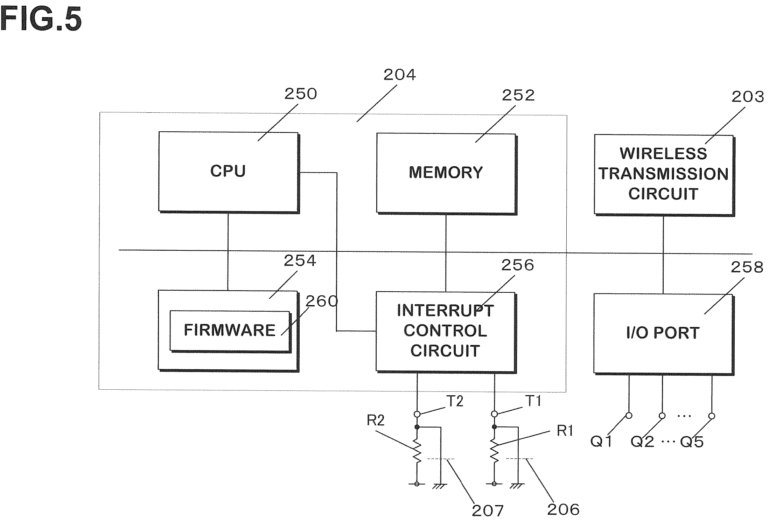

FIG. 5 illustrates hardware configurations of the wireless transmission circuit 203 and the control circuit 204 of the detection sheet body 210. Memory 252, non-volatile memory 254, an interrupt control circuit 256, an I/O port 258, and the wireless communication circuit 203 are connected to a CPU 250 of the control circuit 204. In this embodiment, a wireless communication circuit that conforms to an LPWA standard such as Sigfox^{®} is used.

Firmware (a control program) 260 is recorded in the non-volatile memory 254. This firmware 260 is written by using terminals Q1 ... Q5 via the I/O port 258.

A first terminal T1 of the interrupt control circuit 256 is supplied with a cell voltage via a resistor R1 and is connected to the ground. Similarly, a second terminal T2 is supplied with the cell voltage via a resistor R2 and is connected to the ground. Thus, the terminals T1, T2 are kept at a ground potential (L). When patterns to the ground are cut by breaking structures 206, 207, voltages at the terminals T1, T2 are each changed to the cell voltage (H).

When the voltage of each of the first terminal T1 and the second terminal T2 is changed from L (the low voltage) to H (the high voltage), the interrupt control circuit 256 gives an interrupt signal to the CPU 250. When receiving the interrupt signal, the CPU 250 stops a previous operation mode or previous processing and executes predetermined processing (hardware interrupt). In this embodiment, when receiving the interrupt signal, the CPU 250, which has been in a sleep mode, enters a normal mode and executes the predetermined processing.

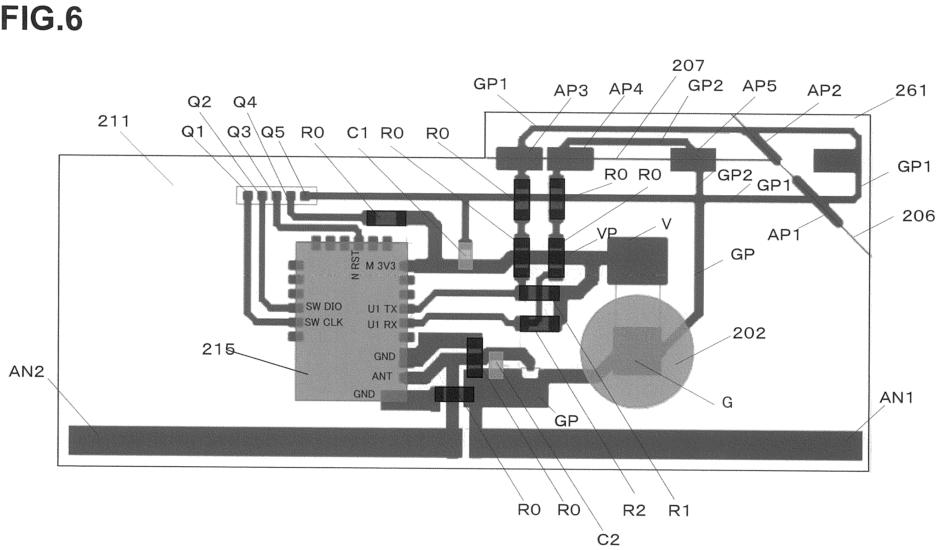

FIG. 6 illustrates a structure of the detection sheet body 210. Antennas AN1, AN2, an anode pad G, a cathode pad V, and a circuit pattern are printed on a thin board 211, which is formed of paper, by the conductive ink. A barcode 49 indicating the detector identification code for uniquely identifying each of the detection sheet bodies 210 is also printed on the thin board 211.

A button cell 202 is placed on the cathode pad G such that an anode of the button cell 202 comes into contact with the cathode pad G. An adhesive tape, an adhesive surface of which is conductive, connects an anode of this button cell 202 and the anode pad V and thereby fixes the button cell 202 to the thin board 211.

In this embodiment, a module 215 (IFS-M01 manufactured by Innovation Farm, Inc.) that incorporates the control circuit 204 and the wireless communication circuit 203 is used. A terminal of the module 215 and the circuit pattern are electrically connected and fixed by a conductive adhesive.

A ground pattern GP extends from the anode pad G and is branched into a ground pattern GP1 as first sheet wiring and a ground pattern GP2 as second sheet wiring. The ground pattern GP1 is connected to an interrupt terminal U1TX of the module 215 as a first terminal via margin patterns AP1, AP2, AP3. FIG. 6 illustrates an electrical conductor R0 provided across the patterns.

The anode of the button cell 202 is connected to this interrupt terminal U1TX via a power supply pattern VP, which extends from the anode pad V, and the resistor R1. A perforation line 206 as the first breaking structure is formed across the ground pattern GP1 along the margin patterns AP1, AP2 by zipping. Each of the margin patterns AP1, AP2 is formed along the perforation line 206 in a manner to be wider than the ground pattern GP1 and prevents poor conduction due to the perforation line 206.

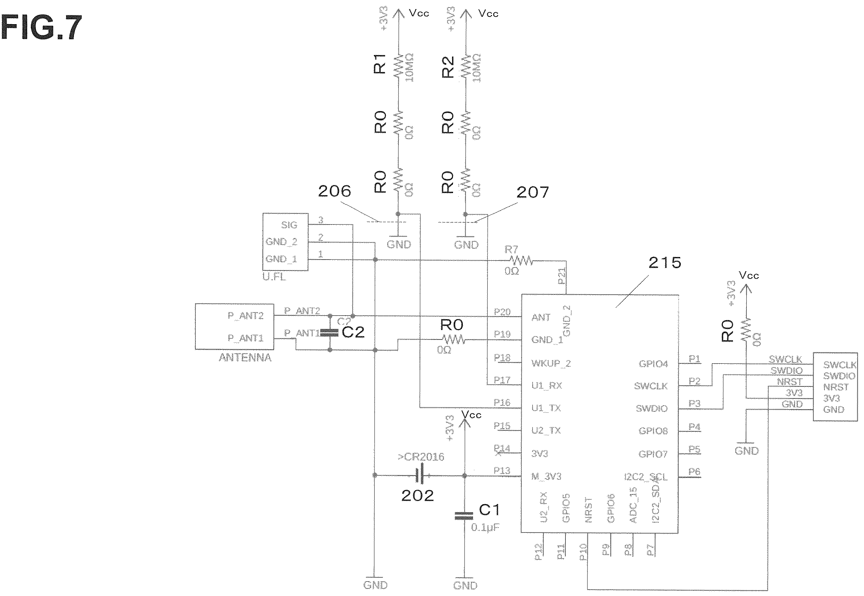

Thus, as illustrated in a circuit diagram in FIG. 7, the interrupt terminal U1TX is kept at "L" unless the thin board 11 is torn off along the perforation line 206. When the thin board 211 is torn off at the perforation line 206, and the ground pattern GP1 is cut, the cell voltage is applied to the interrupt terminal U1TX via the resistor R1, and the voltage of the interrupt terminal U1TX becomes "H".

The ground pattern GP2 is connected to an interrupt terminal U1RX of the module 215 as the second terminal via margin patterns AP5, AP4. In addition, the cathode of the button cell 202 is connected to this interrupt terminal U1RX via the power supply pattern VP extending from the cathode pad V and the resistor R2. A perforation line 207 as the second breaking structure is formed across the ground pattern GP2 along the margin patterns AP3, AP4, AP5 by zipping. Each of the margin patterns AP3, AP4, AP5 is formed along the perforation line 207 in a manner to be wider than the ground pattern GP2 and prevents the poor conduction due to the perforation line 207.

In this embodiment, directions of formation of the perforation line 206 and the perforation line 207 differ from each other. In addition, the perforation line 207 is formed until contacting the perforation line 206 but not formed beyond the perforation line 206. In this way, when a part of the thin board 211 is removed along the perforation line 206, an end of the perforation line 207 appears on an outer periphery of the thin board 211. This promotes tearing along the perforation line 207 after the thin board 211 is torn off along the perforation line 206.

As illustrated in the circuit diagram in FIG. 7, the interrupt terminal U1RX is kept at "L" unless the thin board 211 is torn off at the perforation line 207. When the thin board 211 is torn off at the perforation line 207, and the ground pattern GP2 is cut, the cell voltage is applied to the interrupt terminal U1RX via the resistor R2, and the voltage of the interrupt terminal U1RX becomes "H".

The antennas AN1, AN2 are also formed as printed patterns. The antenna AN1 is connected to the ground pattern GP, and the antenna AN2 is connected to an antenna terminal ANT (is connected to an antenna terminal of the wireless transmission circuit 203) of the module 215. A capacitor C2 is provided between the ground pattern GP, to which the antenna AN1 is connected, and the pattern, to which the antenna AN2 is connected.

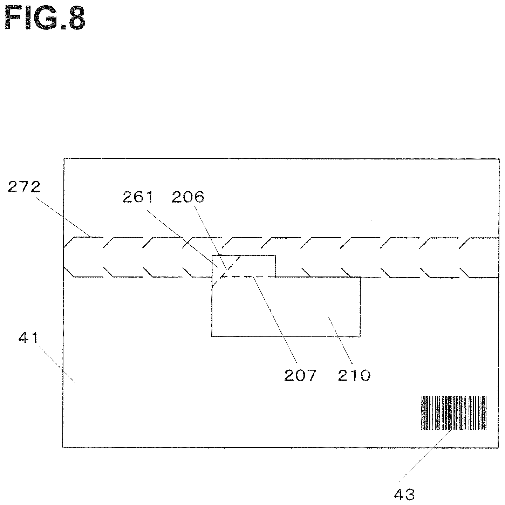

For example, as illustrated in a plan view of FIG. 8, this detection sheet body 210 is affixed along an opening zipper 272 of the container 41 in which the part 4 is accommodated. As illustrated in FIG. 8, the zipper 272 is formed as discontinuous cuts to facilitate opening of the container 41 from a left side along the cuts when the container 41 is opened to take out the part 4. The detection sheet body 210 is affixed such that the perforation line 207 of the detection sheet body 210 follows the cuts of the zipper 272. A triangular region 261 that is formed by the perforation line 206 is not affixed to the container 41 so as to be removable.

A barcode 43 indicating the part identification code of the part 4 is printed on the container 41. In this embodiment, the part identification code (such as a serial number) is assigned not per part type but per piece of the part.

### 1.3 State Detection Processing and Analysis Processing

### 1.3.1 Processing Before Shipping

Prior to adhesion of the detection sheet body 210 to the container 41, pre-processing is executed by a manufacturer of the detection sheet body 210 or a purchaser of the detection sheet body 210.

Prior to the adhesion of the detection sheet body 210 to the container 41, the terminal of the module 215, on which the firmware 260 is written, is made to adhere to the pattern-printed paper (the thin board 211) with the conductive adhesive. Thereafter, the button cell 202 is connected to the detection sheet body 210 with the conductive adhesive and a conductive seal. Power is thereby supplied to the circuit.

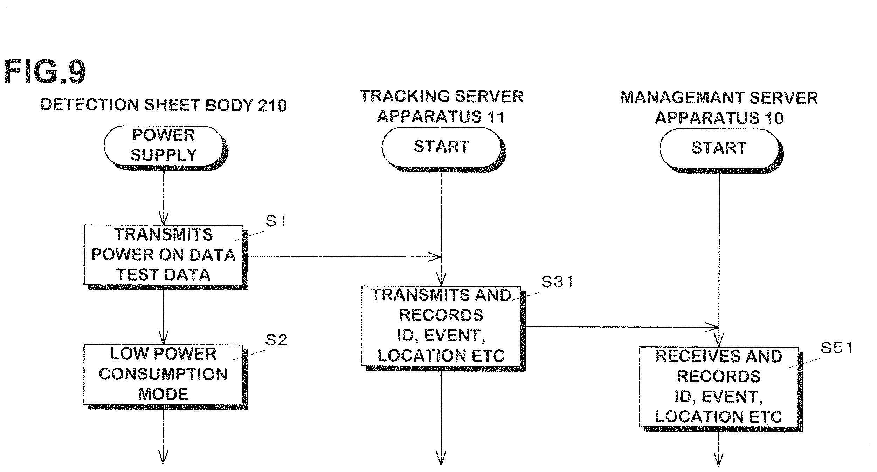

FIG. 9 illustrates a processing flowchart of the firmware 260 after the button cell 202 is attached and the power is supplied. When the firmware 260 is activated by the power supply, the CPU 250 of the control circuit 204 in the detection sheet body 210 (hereinafter may be abbreviated as the control circuit 204) controls the wireless transmission circuit 203 and commands the wireless transmission circuit 203 to transmit power ON data and test data (step S1). In response thereto, the wireless transmission circuit 203 transmits the power ON data and the test data. In this embodiment, an LPWA wireless communication radio wave is modulated and transmitted by transmission data.

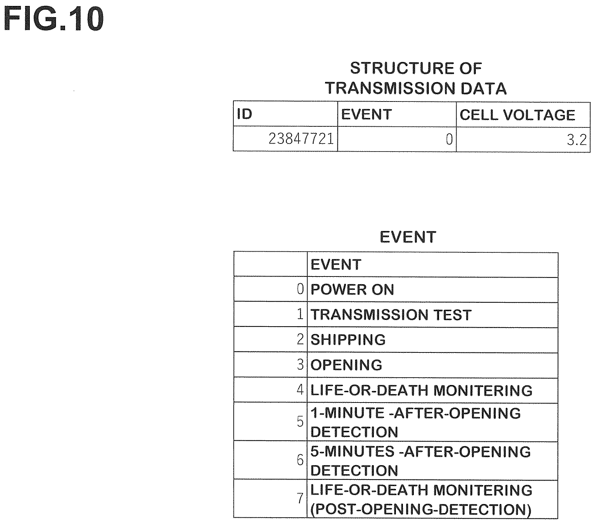

FIG. 10 illustrates a structure of the transmitted data that is transmitted from the wireless transmission circuit 203. ID is an identification code that is uniquely assigned to the detection sheet body 210, and is pre-recorded in the module 215 at the time of manufacture. As illustrated in FIG. 6, this identification code is also displayed as a barcode 49. EVENT is data that indicates a state of the detection sheet body 210, and the state is mapped from 0 to 7 as illustrated in an event correspondence table. CELL VOLTAGE is data that indicates a voltage of the button cell 202 that is detected by a sensor built into the module 215.

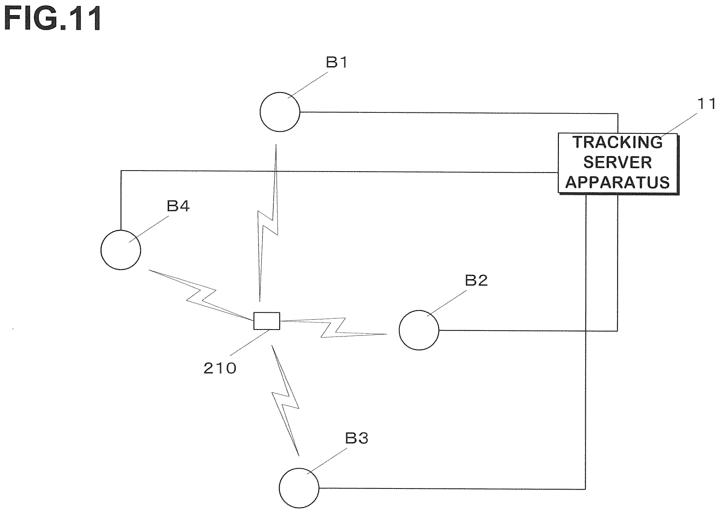

The LPWA radio wave that is transmitted from the wireless transmission circuit 203 is received by the base station near the detection sheet body 210 among the base stations established in various locations. FIG. 11 illustrates a relationship among the detection sheet body 210, base stations B1 to B4, and the tracking server device 11. The radio wave from the wireless transmission circuit 203 of the detection sheet body 210 is received by the base stations B1, B2, B3, B4. At each of the base stations B1 to B4, the data is demodulated from the received radio wave and is transmitted to the tracking server device 11 along with radio wave strength at the time of the reception.

The tracking server device 11 receives these pieces of the data (the ID, the event, the cell voltage, received date and time, and the like) and transmits the data to the management server device 10 (step S31). At this time, the location and location accuracy (an error radius) of the detection sheet body 210 are calculated on the basis of the radio wave strength received at each of the base stations B1 to B4, and these types of information are also transmitted to the management server device 10. The accuracy of the calculated location depends on the number of the base stations used for the calculation. In other words, in the case where the estimation is made on the basis of the radio wave strength from a large number of the base stations, the location accuracy is improved. On the other hand, in the case where the estimation is made on the basis of the radio wave strength from a small number of the base stations, the location accuracy is degraded.

Such accuracy that is determined by the number of the base stations or the like is calculated as the error radius. Roughly speaking, the correct location is within the error radius that is centered on the calculated location.

The CPU 100 of the management server device 10 (hereafter may be abbreviated as the management server device 10) receives the ID, the received date and time, the event, the cell voltage, and the location from the tracking server device 11, and records these pieces of the data as the state data in the SSD 106 (step S51 of FIG.9).

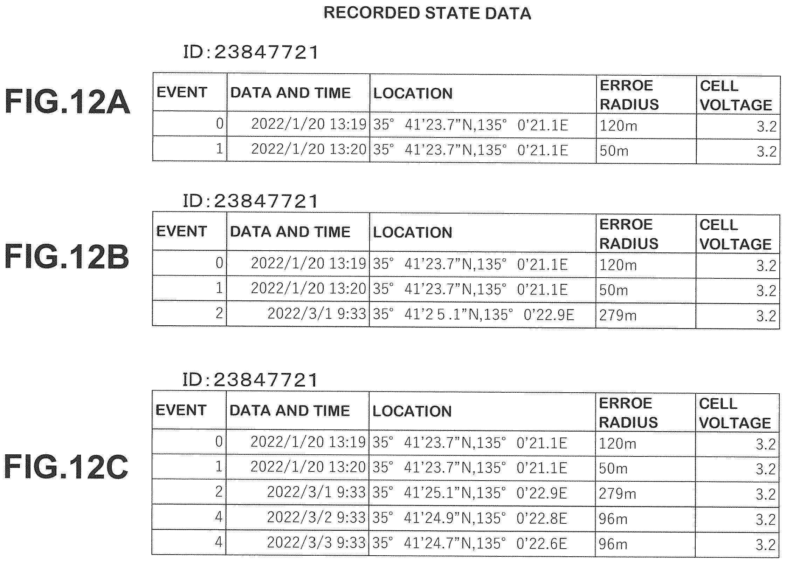

FIG. 12A illustrates the recorded state data. For each of the detection sheet body 210 (that is, for each of the IDs), an event type, occurred date and time (received date and time by the tracking server device 10), the location, and the cell voltage are recorded. In FIG. 12A, transmission of the power ON data and the test data is recorded as the event.

The manufacturer can view this state data by operating a manufacturer terminal device (not illustrated) to access the management server device 10 via the Internet. Thus, in the case where, despite the attachment of the button cell 202, the event related to the power ON data and the test data is not recorded, or the cell voltage is lower than a predetermined value, the manufacturer can acknowledge that the module 215 is defective.

After transmitting the data in step S1, the control circuit 204 of the detection sheet body 210 enters a low power consumption mode (a sleep mode) (step S2). In the low power consumption mode, the CPU 250 does not substantially execute processing other than the processing to accept the interrupt, and thereby reduces drainage of the button cell 202.

### 1.3.2 Correspondence Between Part and Detector

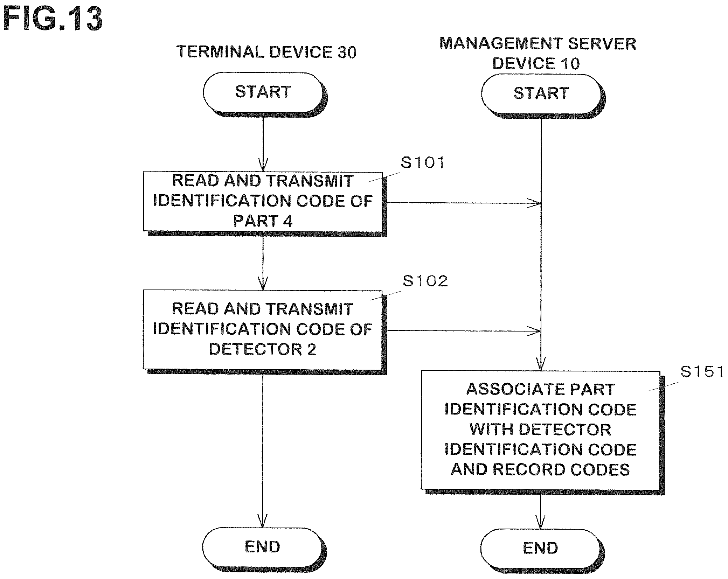

FIG. 13 illustrates a flowchart of correspondence processing between the part and the detector. When shipping the product 4, the person in charge at the manufacturer uses a barcode reader connected to the terminal device 30 to read the barcode 43 of the part identification code printed on the container 41 of the part 4. A CPU of the terminal device 30 (hereinafter may be abbreviated as the terminal device 30) transmits the read part identification code to the management server device 10 (step S101).

Next, the person in charge reads the barcode 49 printed on a surface of the detector 2 with the bar code reader to acquire the detector identification code. The terminal device 30 transmits the read detector identification code to the management server device 10 (step S102).

The CPU 100 of the management server device 10 (hereinafter may be abbreviated as the management server device 10) associates the received part identification code with the received detector identification code and records the identification codes in the SSD 106 (step S151). In this way, it is possible to record which detection sheet body 210 has been made to adhere to which part 4.

The above correspondence processing may be executed prior to shipping rather than at the time of shipping.

### 1.3.3 Processing at Time of Shipping

At the time of shipping, the person in charge at the manufacturer tears off the detection sheet body 210 along the perforation line 206 to remove the triangular region (a removal region) 261. Since the triangular region 261 is removed, a person can easily and visually recognize that the part 4 has been shipped.

As a result, the ground pattern GP1 is cut, and the voltage of the first terminal T1 (the terminal U1TX) is changed from "L" to "H". The interrupt control circuit 256 in FIG. 5 detects this change and gives an interrupt instruction by the terminal T1 to the CPU 250.

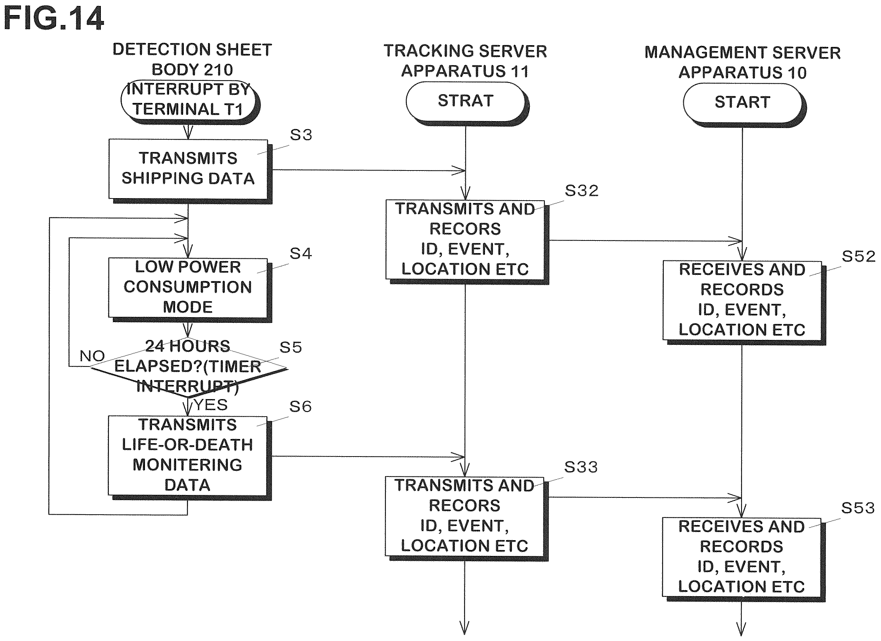

FIG. 14 illustrates a flowchart of interrupt processing by the terminal T1. When the interrupt instruction is given by the terminal T1 (the terminal U1TX), the CPU 250 stops the low power consumption mode and enters a normal operating mode. Then, the CPU 250 commands the wireless transmission circuit 203 to transmit shipping data (step S3). In response thereto, the wireless transmission circuit 203 transmits the transmission data (see FIG. 10) with the event being "2" by the LPWA radio wave.

The tracking server device 11 acquires the shipping data via the base station, adds the date and time, the location, and the error radius to the shipping data, and transmits these pieces of the data to the management server device 10 (step S32). The management server device 10 receives and records these pieces of the data in the SSD 106 (step S52). FIG. 12B illustrates the recorded shipping data. The date and time, the location, and the like are recorded along with the event indicating shipping (dispatching).

After transmitting the radio wave that carries the shipping data, the control circuit 204 of the detection sheet body 210 enters the low power consumption mode (the sleep mode) (step S4). Also, in this low power consumption mode, the CPU 250 does not execute the processing other than the processing to accept the interrupt, and thereby reduces the drainage of the button cell 202. However, in the interrupt processing by the terminal T1, in addition to accepting the interrupt processing by the terminal T2, time is measured by an internal timer provided in the CPU 50 to make a timer interrupt every time a predetermined time elapses. In other words, when being torn off at the perforation line 206, the detection sheet body 210 is activated to make the timer interrupt at the predetermined time.

As described above, after the user tears off the detection sheet body 210 at the perforation line 206, the container 41 accommodating the part 4 is handed to a carrier and transported to the wholesaler, a distributor, or the like.

### 1.3.4 Processing on Route

The part 4 (the container 41) that has been shipped as described above is eventually purchased by a user of the part 4 through the wholesaler, the distributor, or the like. Here, a route from shipping of the part 4 (the container 41) to opening of the container 41 by the user is referred to as the route.

In many cases, the manufacturer is aware of a shipping destination but cannot acknowledge the route taken to the wholesaler, the distributor, or the like and a purchaser who purchases the product through the wholesaler, the distributor (intermediary), or the like. However, in this embodiment, the manufacturer can acknowledge the route and a location of the purchaser.

When the predetermined time (24 hours herein) has elapsed since the transmission of the shipping data, the CPU 250 executes the processing by the timer interrupt (the processing is executed by the interrupt processing although the processing is illustrated as branch processing in the flowchart shown in FIG. 14 in order to facilitate understanding). With this interrupt, the CPU 250 is resumed from the low power consumption mode to the normal mode. Then, the CPU 250 commands the wireless transmission circuit 203 to transmit the state data with the event being "4", that is, life-or-death monitoring data (step S6 in FIG. 14). In response thereto, the wireless transmission circuit 203 transmits the life-or-death monitoring data with the event being "4" by the LPWA wireless radio wave.

The tracking server device 11 acquires the shipping data via the base station, adds the date and time and the location thereto, and transmits the data to the management server device 10 (step S33). The management server apparatus 10 receives and records the data in the SSD 106 (step S53). FIG. 12C illustrates the recorded shipping data. The date and time, the location, and the like are recorded along with the event indicating shipping.

After transmitting the life-or-death monitoring data, the CPU 100 enters the low power consumption mode again (step S4). Then, the timer interrupt controls the transmission of the life-or-death monitoring data at the predetermined time (24 hours herein). Thus, as illustrated in FIG. 12C, after the perforation line 206 is cut, the location of the detection sheet body 210 is tracked and recorded in the management server device 10 every 24 hours. The state data recorded in the management server device 10 can be viewed on the terminal device 30 via the Internet. Thus, the person in charge at the manufacturer can find out the current location of the shipped part 4.

When the location is changed over time, it is understood that the part 4 is moving. Meanwhile, when the part 4 remains in the same location for the predetermined time or longer (for example, one day or longer), it may be determined that the part 4 is at a pickup location of the carrier or a warehouse of a vendor such as a relay store or the wholesaler. In this case, when a table that maps a location of each of these, a name of the respective company, and the like in advance, it is possible to acknowledge which company the part 4 has gone through.

At the time of viewing, the management server device 10 may prepare a display screen to show the location of the detection sheet body 210 on a map based on latitude and longitude.

### 1.3.5 Processing at Time of Opening

Next, when the user opens the zipper 272 to take out and use the part 4, as illustrated in FIG. 8, the perforation line 207 of the detection sheet body 210 is cut at the same time.

In this way, the ground pattern GP2 is cut, which changes the voltage of the second terminal T2 (the terminal U1RX) from "L" to "H". The interrupt control circuit 256 in FIG. 5 detects such a change and gives an interrupt command by the terminal T2 to the CPU 250.

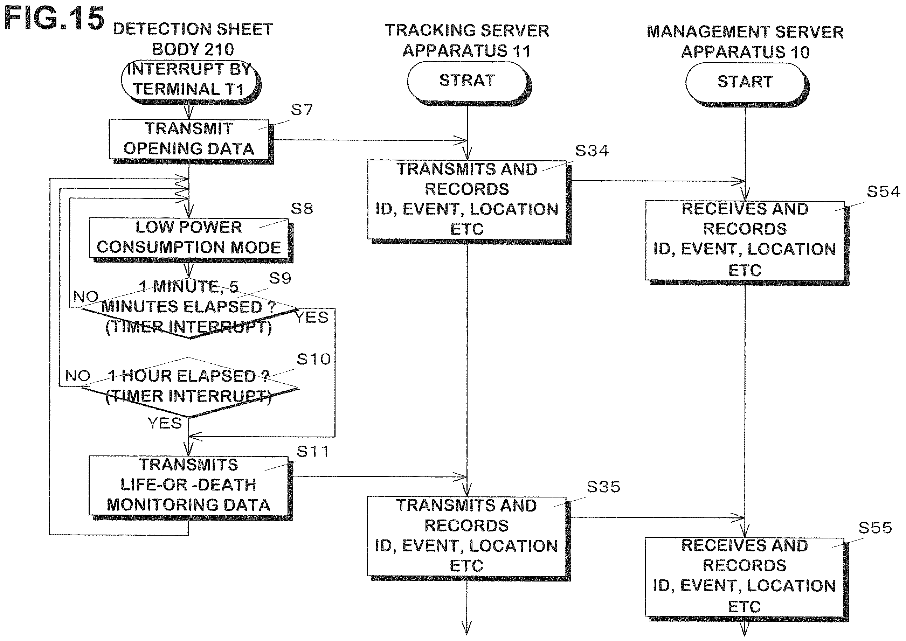

FIG. 15 illustrates a flowchart of interrupt processing by the terminal T2. When the interrupt command is given by the terminal T2 (the terminal U1RX), the CPU 250 stops the low power consumption mode and enters the normal operation mode. Then, the CPU 250 commands the wireless transmission circuit 203 to transmit opening data (usage data) (step S7). In response thereto, the wireless transmission circuit 203 transmits the transmission data (see FIG. 10) with the event being "3" by the LPWA wireless radio wave.

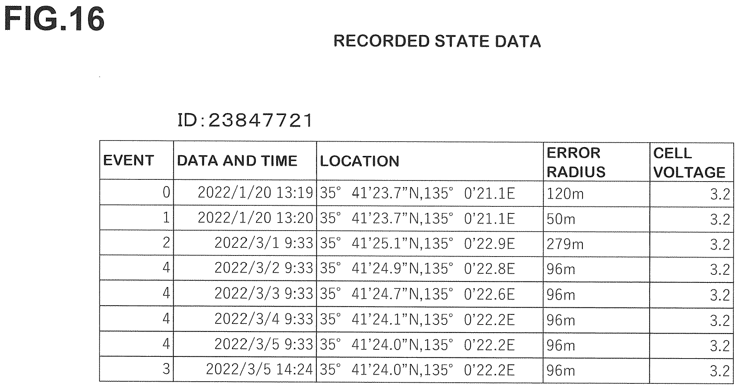

The tracking server device 11 acquires the opening data via the base station, adds the date and time and the location thereto, and transmits the data to the management server device 10 (step S34). The management server apparatus 10 receives and records the data in the SSD 106 (step S54). FIG. 16 illustrates the recorded opening data (usage data). The date and time, the location, and the like are recorded along with the event "3" indicating opening. Thus, by operating the terminal device 30 to access the management server device 10, the person in charge at the manufacturer can confirm that the container 41 has not only arrived but has also been opened by a recipient.

After transmitting the radio wave that carries the opening data, the control circuit 204 of the detection sheet body 210 enters the low power consumption mode (the sleep mode) (step S8). Also, in this low power consumption mode, the CPU 250 does not execute the processing other than the processing to accept the interrupt, and thereby reduces drainage of the button cell 202. However, in the interrupt processing by the terminal T2, the time is measured by the internal timer provided in the CPU 250. Then, the timer interrupt is executed every time a predetermined time elapses.

When the predetermined time (one minute herein) has elapsed since the transmission of the opening data, the CPU 250 executes the processing by the timer interrupt. With this interrupt, the CPU 250 is resumed from the low power consumption mode to the normal mode. Then, the CPU 250 commands the wireless transmission circuit 203 to transmit the state data with the event being "5", that is, one-minute-after-opening detection data (step S 11). In response thereto, the wireless transmission circuit 203 transmits the one-minute-after-opening detection data with the event being "5" by the LPWA wireless radio wave.

The tracking server device 11 acquires the shipping data via the base station, adds the date and time and the location thereto, and transmits the data to the management server apparatus 10 (step S35). The management server device 10 receives and records the data in the SSD 106 (step S55).

After transmitting the one-minute-after-opening detection data, the CPU 250 enters the low power consumption mode again (step S8).

Next, when a predetermined time (four minutes herein) has elapsed since the transmission of the one-minute-after-opening detection data, the CPU 250 executes the processing by the timer interrupt. With this interrupt, the CPU 250 is resumed from the low power consumption mode to the normal mode. Then, the CPU 250 commands the wireless transmission circuit 203 to transmit the state data with the event being "6", that is, five-minutes-after-opening detection data (step S11). In response thereto, the wireless transmission circuit 203 transmits the five-minutes-after-opening detection data with the event being "6" by the LPWA wireless radio wave.

The tracking server device 11 acquires the shipping data via the base station, adds the date and time and the location thereto, and transmits the data to the management server device 10 (step S35). The management server device 10 receives and records the data in the SSD 106 (step S55).

After transmitting the five-minutes-after-opening detection data, the CPU 250 enters the low power consumption mode again (step S8). Thereafter, every predetermined time (every hour herein), the post-opening-detection life-or-death monitoring data is transmitted by the timer interrupt (step S11). This data is also recorded in the management server device 10 via the tracking server device 11.

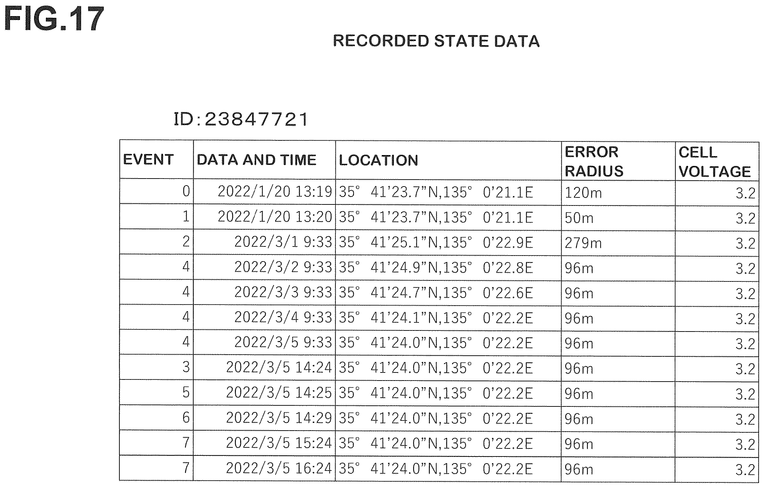

FIG. 17 illustrates the state data that is recorded as described above. A reason why the state data keeps being transmitted after the transmission of the opening data is because, even in the case where the opening data is not received for some reason, it is possible to acknowledge opening by receiving the subsequent data.

In addition, it is possible to learn disposal behavior of a consumer by recording to which location the container 41 moves after being opened. Such information can be used for marketing that is associated with incineration of garbage, the disposal behavior, and the like.

Thereafter, the state data keeps being transmitted until the detection sheet body 210 stops being operated due to running out of the button cell 202 of the detection sheet body 210 or destruction of the detection sheet body 210.

Even in the case where the person in charge at the manufacturer has forgotten to tear off the detection sheet body 210 along the perforation line 206, opening of the container 41 after shipping is detected by tearing off of the detection sheet body 210 along the perforation line 207 during opening. As illustrated in FIG. 8, the pattern is configured such that, even in the state where the detection sheet body 210 is not torn off along the perforation line 206 or is torn off along the perforation line 206 in either left or right direction, the voltage of the first terminal becomes "H" before the voltage of the second terminal becomes "H". This is because cutting points of the first terminal are provided on both sides of cutting points of the second terminal.

Thus, the operation is performed even when the person in charge at the manufacturer has forgotten to tear off the detection sheet body 210 along the perforation line 206 at the time of the dispatch. However, since a time difference between shipping and opening is recorded to be extremely small, it is possible to acknowledge that tearing off along the perforation line 206 has been forgotten at the time of the dispatch and that the actual dispatch timing is before the recorded date and time.

### 1.3.6 Analysis Processing

As described above, the location route from the dispatch time point of the part 4, which is dispatched from the manufacturer, to a usage time point is recorded in the management server device 10. The person in charge at the manufacturer accesses the management server device 10 from the terminal device 30 to acquire these pieces of the data.

In this way, the person in charge at the manufacturer can find out which route has been taken by each of the parts 4 to reach the user. For example, when the part 4 remains in the same location for the predetermined time or longer (for example, one day or longer), it can be determined that the part 4 has been placed at the wholesaler or the dealer or has arrived and stored at the user or the like. In this case, when the wholesaler, the dealer, and the user whose locations are known, the locations thereof are recorded and associated in the terminal device 30. In this way, it is possible to find out which user the part 4 has reached through which wholesaler, dealer, or the like. A particular advantage is that it is possible to track a destination to which the wholesaler, to which the manufacturer has shipped the part 4, has sold the part 4.

In addition, with reference to the data on the plural parts 4, it is possible to calculate average days required from the dispatch to use, a percentage of the actually used parts 4 among the parts 4 that have reached the user(s), a quantity of the parts 4 currently on the distribution route. These numerical values can also be calculated per region.

As illustrated in FIG. 2, the shipping plan and the production plan can be created on the basis of the above data.

Furthermore, the average time (days) required from the dispatch to use may be calculated per region of use on the basis of the shipping date and time, the usage date and time, and the location of use, and a dispatch quantity per unit period may be determined for the wholesaler in the respective region. On the tracking route, a last location where the part 4 is kept before reaching the user may be set as a last dealer, an average time (days) required from the dispatch to arrival at the last dealer may be calculated per region where the last dealer is located, and a dispatch quantity per unit period may be determined for the wholesaler in the respective region.

### 1.4 Modified Examples

(1) In the above embodiment, the detection sheet body 210 is used as the detector 2. However, another detector capable of detecting the dispatch at the time of the dispatch and detecting use at the time of use may be used. For example, a detector that emits the radio wave other than the LPWA, a detector, such as an RFID tag, that does not have a power source and reads the state from an external reader, or the like may be used.
(2) In the above embodiment, the route from the dispatch at the manufacturer to the user is tracked. However, the wholesaler or the dealer may track a route from the dispatch at the wholesaler or the dealer to the user. Alternatively, the analysis system described above may be used when the carrier manages a route of a package (for own use or for the user) that is accepted and delivered.
(3) In the above embodiment, the detector 2 is attached to each of the parts 4. However, a first detector may be attached to a container such as a box containing the plural parts 4, and a second detector may be attached to each of the parts 4. In this case, until the box is opened, the first detector tracks the box in the middle of the distribution route. Then, once the box is opened, and the parts 4 are divided, the second detectors may detect the respective parts 4. A circuit may be configured that the second detectors are not activated unless the first detector detects opening of the box. Alternatively, even in the case where both of the first detector and the second detector are activated, transmission data from the second detector may not be used until the first detector detects opening of the box.
(4) In the above embodiment, the data is analyzed and used for the shipping plan and the production plan. However, a region where an advertisement is placed and a planned quantity therein may be calculated by comparing the number of use in each region.
(5) In the above embodiment, the LPWA wireless radio wave is used. However, another wireless method such as normal portable wireless communication may be used.
(6) In the above embodiment, the location information is also detected. However, it may only be detected that shipping has been made and that the shipment has been opened.
(7) In the above embodiment, the location data after the dispatch is detected at the predetermined time intervals. This is done to avoid the drainage of the button cell 202, which is possibly caused by the acquisition of the location data prior to the dispatch and possibly interferes with tracking after the dispatch. However, in the case where the button cell 202 has sufficient capacity, the location data prior to the dispatch may be acquired. In this way, it is possible to acknowledge a route taken by the detection sheet body 210 before arriving at the recipient, and such information can be used for marketing and the like.
   In addition, even in the case where the processing to break the first breaking structure 206 is forgotten at the time of the dispatch, with the acquired location data, it is possible to estimate the dispatch time on the basis of the location data.
(8) In the above embodiment, the portion that is cut out at the time of the dispatch (the triangular area 261 in the above embodiment) is discarded. However, a unique number (which may be associated with the ID of the detection sheet body 210) (may be a barcode) may be printed on this portion and retained by the person in charge at the manufacturer as a shipping receipt.
(9) In the above embodiment, the paper is used as the thin board 211. However, a thin plastic material or the like may be used as long as the breaking structure of the material can easily be broken.
(10) In the above embodiment, the detection sheet body 210 and the container 41 are configured as separate components and are affixed to each other. However, a part of the container 41 may be patterned as the detection sheet body, and the container 41 and the detection sheet body may be configured as an integrated component.
(11) In the above embodiment, the tracking server device 11 and the management server device 10 are configured as separate server devices. However, these server devices may be configured as a single server device.
(12) In the above embodiment, the container 41 with the zipper structure is used. However, the detection sheet body 210 may be provided such that the second breaking structure is broken by opening the cardboard or the like.

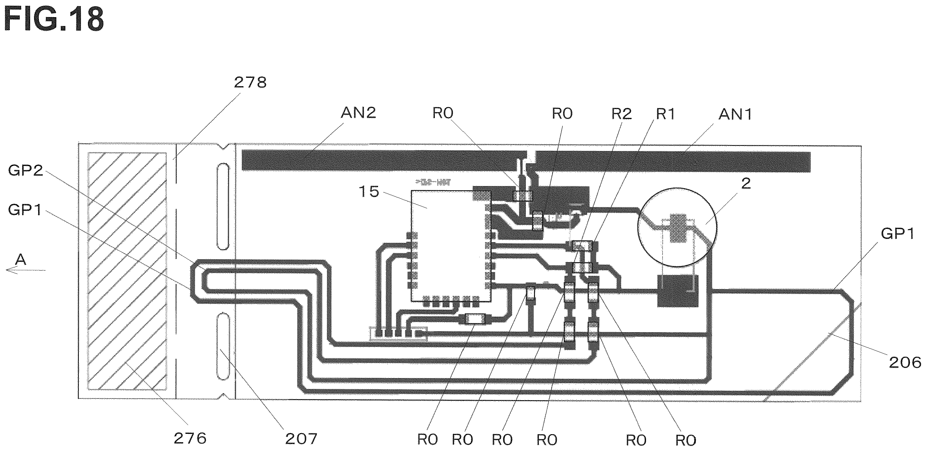

FIG. 18 illustrates a structure of the detection sheet body 210 that is configured for the cardboard box. A circuit diagram thereof is substantially the same as that in FIG. 7.

The ground pattern GP1 is cut on the perforation line 206 as the first breaking structure, and the ground pattern GP2 is cut by a vulnerable section 207 as the second breaking structure. A seal 276 is provided at an end from a fold line 278. The seal 276 is configured to be peelable, and an adhesive material appears when the seal 276 is peeled off. The vulnerable section 207 is notched or hollowed out such that, when a pulling force is applied in an arrow A direction, the detection sheet body 210 is broken from this portion. Preferably, the fold line 278 is printed as a guide line for folding and is not a perforation line. The fold line 278 may be easily foldable by the perforation line or the like. However, strength of the fold line 278 against the breakage is preferably increased when compared to the vulnerable section 207.

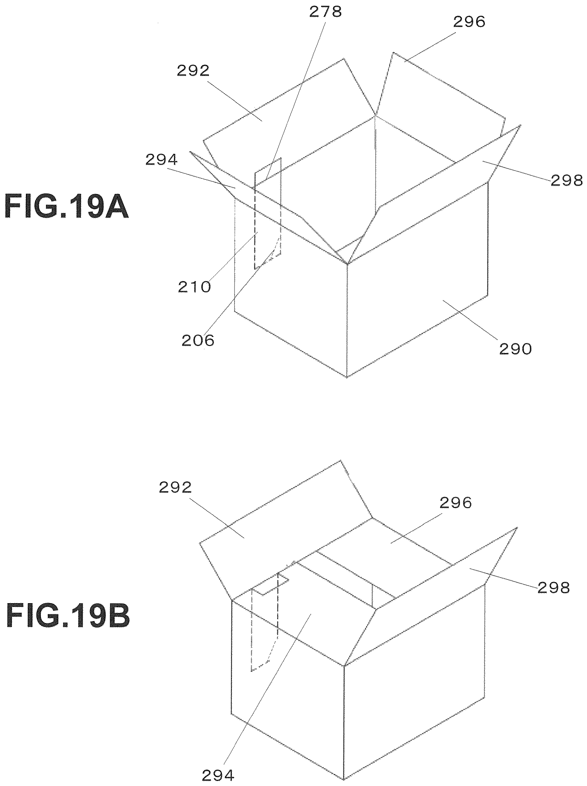

FIG. 19A illustrates processing in the case where this detection sheet body 210 is used to dispatch the parts. The detection sheet body 210 is affixed to inside of a cardboard box 290. At this time, it is set that the fold line 278 matches a folded section of a flap 292.

The detection sheet body 210 may be affixed to the cardboard box 290 when the package is dispatched, or the cardboard box 290, to which the detection sheet body 210 has already been affixed, may be prepared in advance.

In the state illustrated in FIG. 19A, the parts are packed in the cardboard box 290, and thereafter the detection sheet body 210 is cut on the perforation line 206. As a result, the shipping data is transmitted. Next, the flaps 292, 294, 296, 298 are closed. At this time, as illustrated in FIG. 19B, the seal 276 is peeled off, and the detection sheet body 210 is affixed to an upper surface of the flap 294.

Once the cardboard box 290 is dispatched, the location thereof is tracked by transmitting the life-or-death monitoring data at the predetermined time intervals.

When the user opens the cardboard box 290 to use the part, the user opens the flap 294. At this time, due to the adhesion of the detection sheet body 210 to the upper surface of the flap 294, the vulnerable section 207 is applied with the force in the arrow A direction in FIG. 18 and thus is broken. As a result, the usage data is transmitted.
(13) In the above embodiment, tracking of the part 4 as the target object has been described. However, but the product, a good, or the like may be the target object.
(14) In the above embodiment, the case where the detection sheet body 210 is provided on the container 41 has been described. However, the detection sheet body 210 can be used not only to the container, such as the cardboard box, in general used for shipping but also to an envelope and the like.
(15) In the above embodiment, shipping, opening, the location, and the like are transmitted. However, instead of or in addition to any of these, environmental information (a temperature, humidity, illuminance, water leakage, or the like) may be acquired by a sensor and transmitted.

For example, a temperature sensor may be provided to the detection sheet body 210. Then, detection data can be transmitted (for example, transmitted when the life-or-death monitoring data is transmitted) at predetermined time intervals after the dispatch. In this way, it is possible to detect a temperature of the target object during transportation, and such information can be used for transportation management of fresh food and the like.

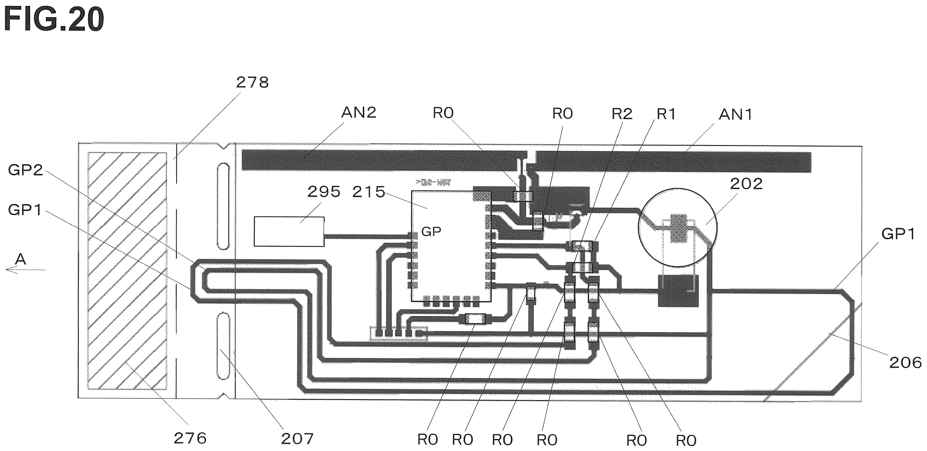

FIG. 20 illustrates a structure of the detection sheet body 210 provided with a temperature sensor 295. In the case where output data from the temperature sensor 295 is an analog signal, the analog signal has to be subject to A/D conversion and be imported as digital data. The module 215 (IFS-M01 manufactured by Innovation Farm, Inc.) used in the above embodiment has an A/D converter therein. When the analog signal is transmitted to an input terminal GP, the CPU 250 can acquire data digitized by the A/D converter. Consequently, the CPU 250 can transmit this data by the wireless transmission circuit 203.

In addition, a sensor that detects energization caused by water leakage or the like can be provided to detect that the target object has leaked.
(16) In the above embodiment, even when cutting of the perforation line 206 is forgotten at the time of the dispatch, the package can be opened by hand at the time of opening. However, the thin board 211 may be configured to be strong enough that the thin board 211 cannot be torn without the perforation line. In such a case, in the case where the perforation line 206 is not cut at the time of the dispatch, the triangular area 261 in FIG. 8 may not be torn by hand even when the perforation line 207 is cut at the time of opening. In regard to the product that is purchased under a condition that the user knows a shipping date thereof in advance, the recipient can return the product without opening the package.
(17) In the above embodiment, the processing to transmit the shipping data and the usage data is executed by the hardware interrupt processing. However, normal determination processing may be executed to transmit the shipping data and the usage data. The same applies to the timer interrupt.
(18) In the above embodiment, the vulnerable section that is provided with the perforation line or a hole is used as the breaking structure. However, another type of the breaking structure such as a series of half-deep cuts in a thickness direction may be used as long as such a structure can be broken.
(19) In the above embodiment, the description has been made on the example in which the container has the breaking structure. However, a wrapper (a plastic wrapper or the like) that wraps the container may be provided with the breaking structure.
(20) In the above embodiment, the analysis processing is executed in the terminal device 30. However, the management server device 10 may execute the analysis processing, and the terminal device 30 may acquire the analysis result. Alternatively, an analysis device that executes tracking processing and the analysis processing may be constructed as a normal PC instead of the server device.
(21) The modified examples described above can be implemented in combination with each other and can also be implemented with other embodiments.

### 2. Second Embodiment

### 2.1 Functional Configuration

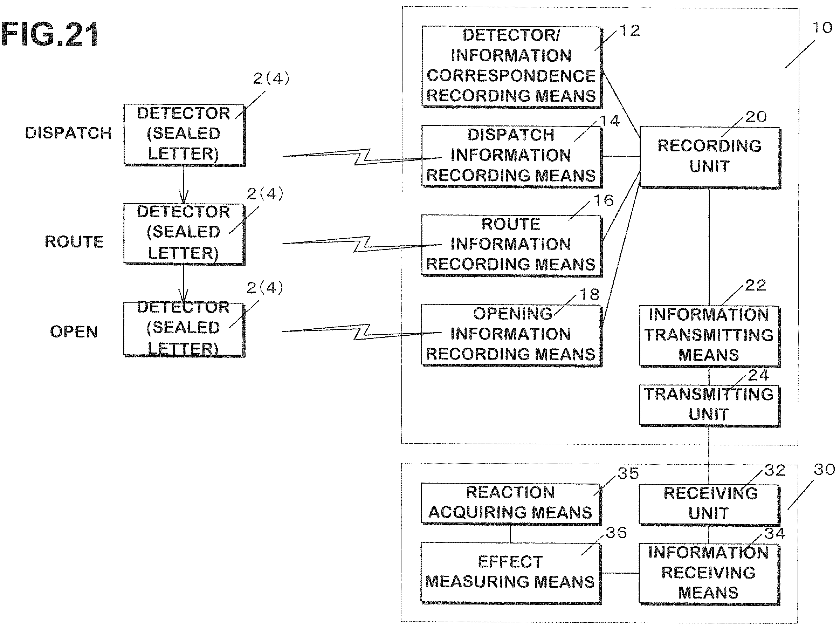

FIG. 21 illustrates a functional configuration of an information transmission effect measurement system according to a second embodiment. This system includes the detector 2 attached to a sealed letter 4 containing promotional information such as a flyer, the server device 10, and the terminal device 30.

Detector/information correspondence recording means 12 of the server device 10 associates an identification code of the detector 2 attached to each of the sealed letters with an identification code for identifying the flyer enclosed in the respective sealed letter, and records the associated identification codes in the recording unit 20.

When this sealed letter 4 is dispatched, shipping input is given to the detector 2. Dispatch information recording means 14 acquires a date and time, the location of the detector 2, and the identification codes at the time when the shipping input is given, and records these pieces of information as dispatch information in the recording unit 20.

In regard to the sealed letter 4 that has been dispatched and is on a delivery route, route information recording means 16 acquires the date and time, the location of the detector 2, and the identification codes at predetermined intervals, and records these pieces of the information as route information in the recording unit 20.

When the sealed letter 4 arrives at the recipient, and the recipient opens the sealed letter 4, opening input is given to the detector 2. For example, opening of the sealed letter 4 disconnects or switches on the circuit, and the usage input is thereby given to the detector 2. Opening information recording means 18 acquires a date and time, the location of the detector 2, and the identification codes at the time when the opening input is given, and records these pieces of information as opening information in the recording unit 20.

The information transmitting means 22 transmits the dispatch information, the route information, and the opening information described above to the terminal device 30 by the transmitting unit 24.

The information receiving means 34 of the terminal device 30 receives these pieces of the dispatch information, the route information, and the opening information by the receiving unit 32. In addition, the terminal device 30 acquires a reaction (for example, a product purchase application or the like) of the recipient who has received the enclosed letter 4 and read the flyer or the like enclosed in the sealed letter as presence or absence of a reaction.

Effectiveness measuring means 36 calculates, as effect information, a ratio of the number of the reactions to the number of the shipped sealed letters on the basis of the dispatch information, the opening information, and the presence or the absence of the reaction. The effect information may be calculated per open region on the basis of the opening information. In addition, the effect information may be calculated per route on the basis of the route information. When the route information is not used, the route information recording means 16 may not be provided.

The effect measuring means 36 may calculates, as the effect information, a ratio of the number of the shipped sealed letters to the number of the opened sealed letters on the basis of the dispatch information and the opening information. In this case, the effect measuring means 36 may not be provided. In the same manner as above, the effect information may be calculated per region.

Information transmission effect can be measured as it has been described so far.

### 2.2 System Configuration and Hardware Configuration

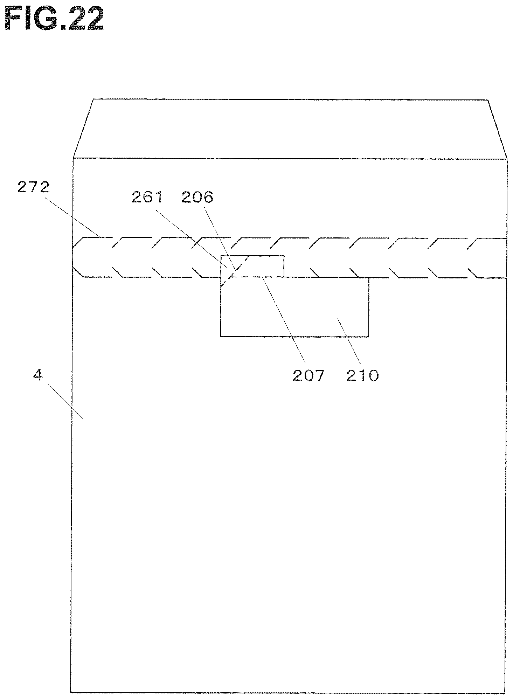

A system configuration and a hardware configuration are the same as those in the first embodiment. In this embodiment, as illustrated in FIG. 22, a detection seal body 210 is affixed to the sealed letter 4 (a direct mail) in which the flyer advertising the product or the like is enclosed. A direct mail dispatcher uses the terminal device 30 to measure effect of the direct mail.

### 2.3 State Detection Processing and Effect measurement Processing

The direct mail dispatcher records a detector identification code of the detection sheet body 210, which is affixed to the sealed letter 4 sent this time, in the terminal device 30 at the time of the dispatch. In the case where the ten thousands sealed letters are dispatched, the ten thousands detector identification codes are recorded. Similarly, an identification code of the advertising flyer enclosed in the sealed letter 4 (each flyer has a unique identification code) is recorded in the terminal device 30. Also, in the case where the ten thousands sealed letters are dispatched, the ten thousands information identification codes are recorded.

Processing of recording the dispatch information (the shipping information), the route information, the opening information (the usage information) in the recording unit 20 by the management server device 10 is the same as that in the first embodiment. However, the detector identification code of the detection sheet body 210 affixed to the sealed letter 4 is associated with the information identification code of the advertising flyer enclosed in the sealed letter 4, and these codes are managed. In this way, it is possible to clarify which advertising flyer is managed by which detection sheet body 210.

As described in the first embodiment, the shipping date and time, the opened date and time, and the like are recorded per sealed letter 4 in the management server device 10.

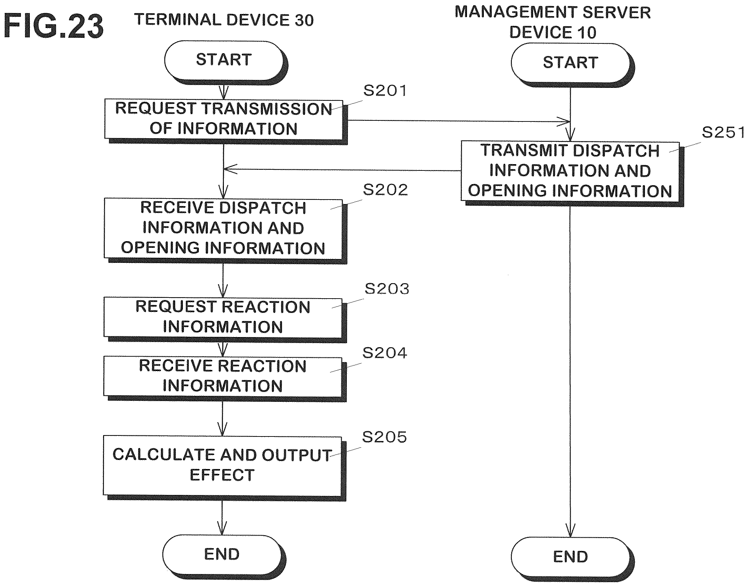

FIG. 23 illustrates a flowchart of effect measurement processing by the terminal device 30 owned by the dispatcher. The terminal device 30 identifies the detector identification code and requests the management server device 10 to transmit information (step S201). Here, the terminal device 30 identifies the detector identification codes (for example, ten thousands codes) of the detection sheet bodies 210 affixed to the sealed letters 4 dispatched this time, and requests information thereon.

The management server device 10 that accepts the request transmits the dispatch information and the opening information of the requested detector identification codes to the terminal device 30 (step S251). The terminal device 30 receives and records the information (step S202).

Next, the terminal device 30 accesses a sales server device (not illustrated) for the product listed in the advertising flyer and requests reaction information thereof accompanied by the identification code of the advertising flyer dispatched this time (step S203).

When the sales server device is accessed on the basis of any of the advertising flyers, the identification code of the advertising flyer is recorded therein. This can be done, for example, by printing a URL of the sales server device in a QR code^{®} on the advertising flyer. The consumer who has received the advertising flyer can read this QR code^{®} with a smartphone or the like to access the sales server device. Furthermore, the identification code of the advertising flyer is included as a parameter in this QR code^{®}. In this way, it is possible to find out which of the advertising flyers is the basis for the consumer's visit to the sales server device. The sales server device also records behavior of the consumer (just visited, opened a product page, purchased the product, or the like).

The sales server device that has received the request in step S203 transmits the behavior of the recorded consumer (the reaction information) to the terminal device 30. The terminal device 30 receives and records the information (step S204).

Next, based on the dispatch information and the reaction information, the terminal device 30 calculates, as the effect information, the number of the reactions (for example, purchases) to the number of the mailed advertising flyers (step S205). The terminal device 30 may calculate the effect information on the number of visits to the website or the number of views of the product page.

Alternatively, the terminal device 30 may calculate, as the effect information, the number of the opened advertising flyers among the number of the mailed advertising flyers. Furthermore, the terminal device 30 may calculate, as the effect information, the number of the reactions with respect to the number of the opened advertising flyers.

Moreover, the terminal device 30 may calculate any of these types of the effect information per region where the advertising flyers are opened, per time of day or day of week when the advertising flyers are opened, or per route.

### 2.4 Modified Examples

(1) In the above embodiment, the route information is recorded in the management server device 10. However, when the route information is not used to calculate the effect, the route information does not have to be recorded in the management server device 10.
(2) In the above embodiment, the terminal device 30 includes reaction acquiring means 35. However, when the reaction information is not used to calculate the effect, the terminal device 30 may not include the reaction acquiring means 35.
(3) In the above embodiment, the terminal device 30 includes the reaction acquiring means 35. However, the management server device 10 may include the reaction acquiring means 35 and transmit the reaction information to the terminal device 30.
(4) In the above embodiment, the terminal device 30 includes the effect measuring means 36. However, the management server device 10 may include the reaction acquiring means 35 and the effect measuring means 36 and transmit the effect information to the terminal device 30. Alternatively, the effect calculation device that executes the tracking processing and the effect calculation processing may be constructed not as the server device but as a normal PC.
(5) In the above embodiment, the case where the detection sheet body 210 is affixed to the sealed letter 4 has been described. However, the detection sheet body 210 may be affixed to a portion to be peeled of a peelable postcard with information being provided inside.
(6) In the above embodiment, the description has been made on the advertising flyer as the example. However, a degree of transmission of another type of information, such as a survey or an announcement, may be measured.
(7) The modified examples described above can be implemented in combination with each other and can also be implemented with other embodiments.

### 3. Third Embodiment

### 3.1 Functional Configuration

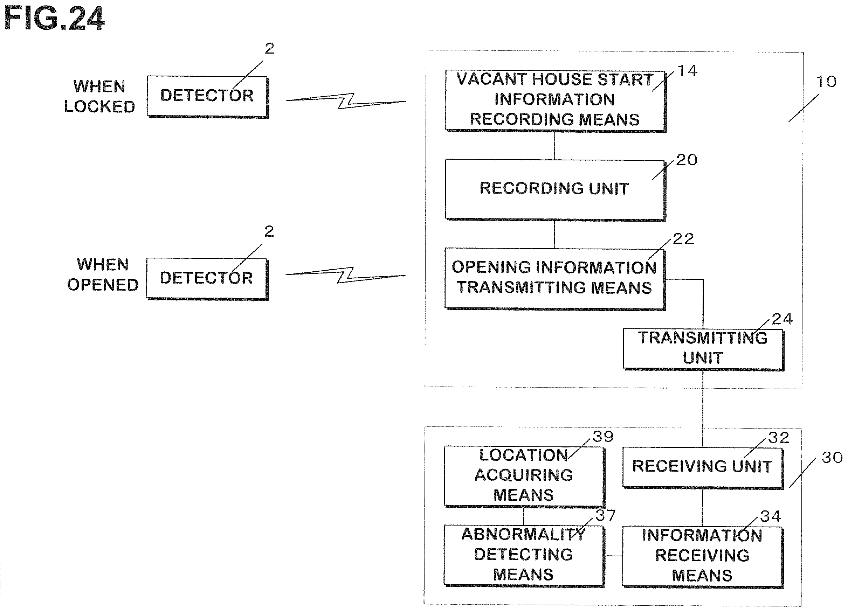

FIG. 24 illustrates a functional configuration of a monitoring system according to a third embodiment. In this embodiment, unauthorized intrusion is monitored while a resident is away from home for a trip or the like. This system includes a detector 2 attached to an opened/closed body, such as a front door or a window, of a house, a server device 10, and a terminal device 30.

When leaving the house for the trip or the like, the user gives a start input to the detector 2 attached to the front door or the like. Vacant house start information acquiring means 14 acquires a date and time, the location of the detector 2, and an identification code at the time when the start input is given, and records information as start information in a recording unit 20.

When the front door, to which the detector 2 is attached, is opened, an opening input is given to the detector 2. For example, opening of the front door or the window disconnects or switches on the circuit, and a usage input is thereby given to the detector 2.

Opening information transmitting means 22 acquires, as opening information, a date and time, the location of the detector 2, and the identification code at the time when the opening input is given. Furthermore, a transmitting unit 24 transmits the opening information (may be accompanied by the vacant house start information) to a smartphone 30 (a mobile terminal) owned by the user.

Information receiving means 34 of the smartphone 30 receives the opening information by a receiving unit 32. Location acquiring means 39 acquires a location of the smartphone 30 at the time when the information receiving means 34 receives the opening information (or when the opening information is transmitted). For example, the location of the smartphone 30 can be acquired by a built-in GPS receiver or the like.

Abnormality detecting means 37 determines that a person other than the user has entered the house when a distance between the location of the detector 2 included in the opening information and the location of the smartphone 30 is equal to or longer than a predetermined distance (for example, 10 m or longer). Then, the smartphone 30 issues a warning using voice, a screen, text, or the like. Alternatively, a warning mail or the like is transmitted to a pre-registered contact such as the police or a security company.

In the case where the user carries the smartphone 30 when returning home and opening the front door or the like, the distance between the location of the detector 2 and the location of the smartphone 30 falls within the predetermined distance. Thus, the warning is not issued.

The vacant house can be monitored as it has been described so far.

### 3.2 System Configuration and Hardware Configuration

A system configuration and a hardware configuration are the same as those in the first embodiment. In this embodiment, a detection sheet body 210 is affixed to the door or the window so that a second breaking structure is broken when the door or the window is opened. In addition, before leaving the house, the user breaks a first break structure to transmit a vacant house start signal.

### 3.3 Monitoring Processing

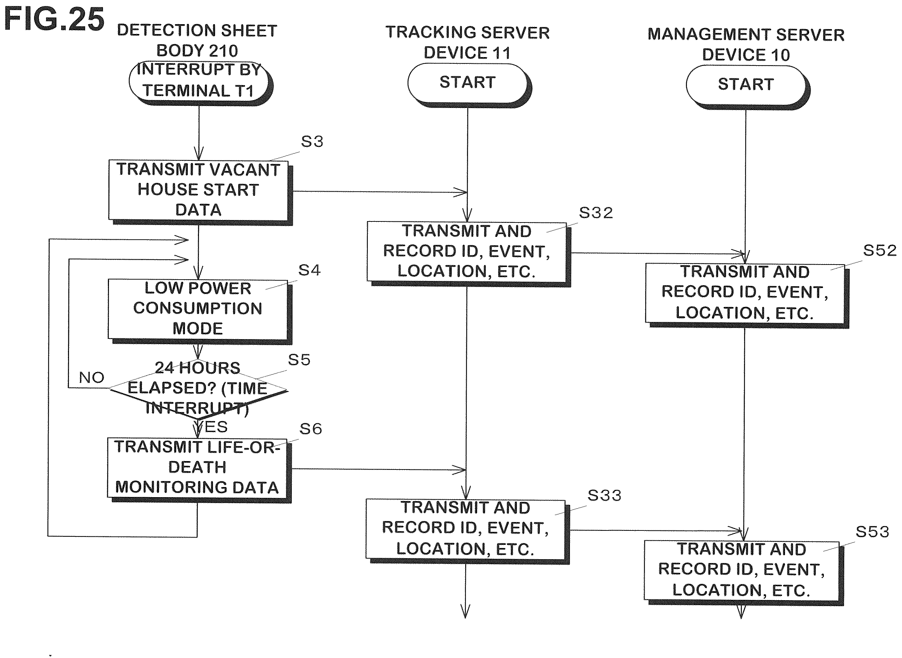

FIG. 25 illustrates a flowchart of processing after the vacant house start signal is transmitted. In the case where the user breaks the first breaking structure (a perforation line 206) when leaving the house, the date and time, the location, the identification code, and the like at the time are recorded in the management server device 10 (step S52). At this time, the management server device 10 may contact the smartphone 30 owned by the user to inform the user that unauthorized intrusion monitoring processing has started.

Thereafter, as in the first embodiment, the date and time, the location, and the identification code are recorded in the management server device 10 at predetermined time intervals (step S53). In this embodiment, it is not necessary to acquire the route information. Thus, the processing to acquire the route information may not be executed (or an execution interval of such processing may be extended).

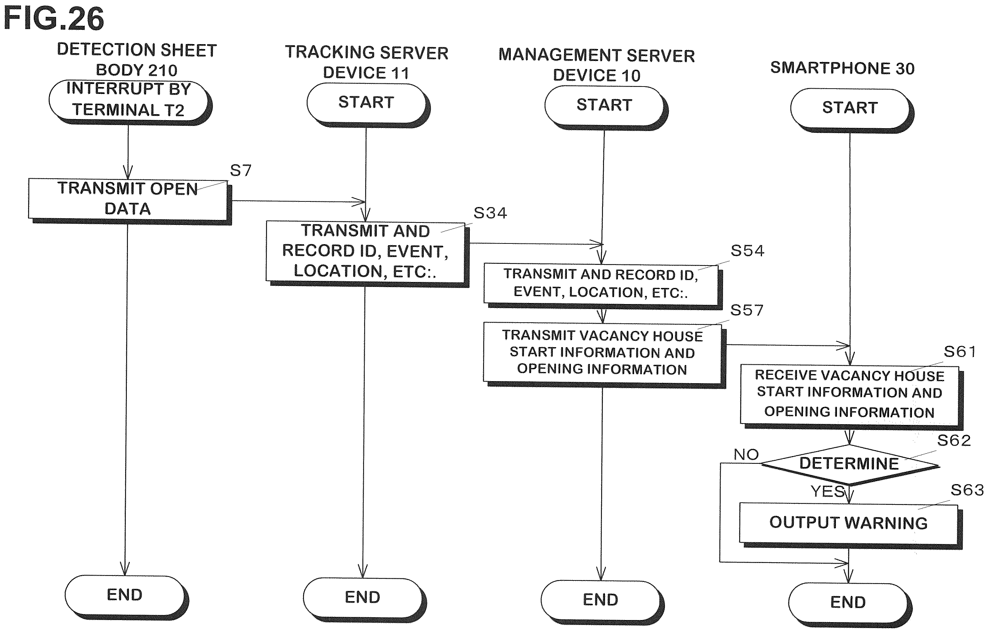

FIG. 26 illustrates a processing flowchart at the time when the door or the window is opened. When the door or the window is opened, the second breaking structure (the perforation line 207) of the detection sheet body 210 is broken. Consequently, the management server device 10 acquires, as the opening information, the date and time, the location, the identification code, and the like at the time (step S54). The management server device 10 that has acquired the opening information transmits the opening information to the smartphone 30 (step S57). It is registered in advance to which smartphone 30 the opening information is transmitted.

The smartphone 30 carried by the user receives this opening information (step S61). Next, the smartphone 30 acquires own location by the built-in GPS receiver and determines whether a distance between the own location and the location of the detection sheet body 210 indicated in the opening information falls within the predetermined distance (step S62).

If such a distance falls within the predetermined distance (for example, within several meters), it is determined that the user himself/herself has opened the door or the like, and the warning is not output (a notification that the door or the like has been opened may be made). If such a distance does not fall within the predetermined distance, it is determined that the person other than the user has opened the door, and the smartphone 30 outputs the warning (step S63). In this way, for example, the user on the trip can acknowledge the unauthorized intrusion to the house.

### 3.4 Modified Examples

(1) In the above embodiment, the smartphone 30 makes the determination and outputs the warning. However, in order to allow the user to make the determination, the opening information may simply be shown on a display or the like.
(2) In the above embodiment, the vacant house start information is transmitted to the smartphone 30. However, the vacant house start information may not be transmitted, and only the opening information may be transmitted to the smartphone 30.
(3) In the above embodiment, the case where the house becomes vacant has been described. However, the above embodiment can also be applied to a case where the user leaves the house while a child or an elder stays the house, or the like.
(4) In the above embodiment, the smartphone 30 includes the abnormality detecting means 37. However, the server device 10 may include the abnormality detecting means 37 and transmit the warning based on the determination result to the terminal device 30. In this case, the management server device 10 may request the smartphone 30 to transmit the location information for the determination and thereby acquires the location of the smartphone 30. In addition, the monitoring device that executes the vacant house start processing, the open processing, and the abnormality detection processing may be constructed not as the server device but as the normal PC.
(5) In the above embodiment, the detection sheet body 210 has the two breaking structures. However, the only one breaking structure may be provided and broken when the door or the like is opened. Also, in this case, it is possible to acquire the opening information and determine whether the unauthorized intrusion has occurred.
(6) The modified examples described above can be implemented in combination with each other and can also be implemented with other embodiments.

### 4. Fourth Embodiment

### 4.1 Functional Configuration

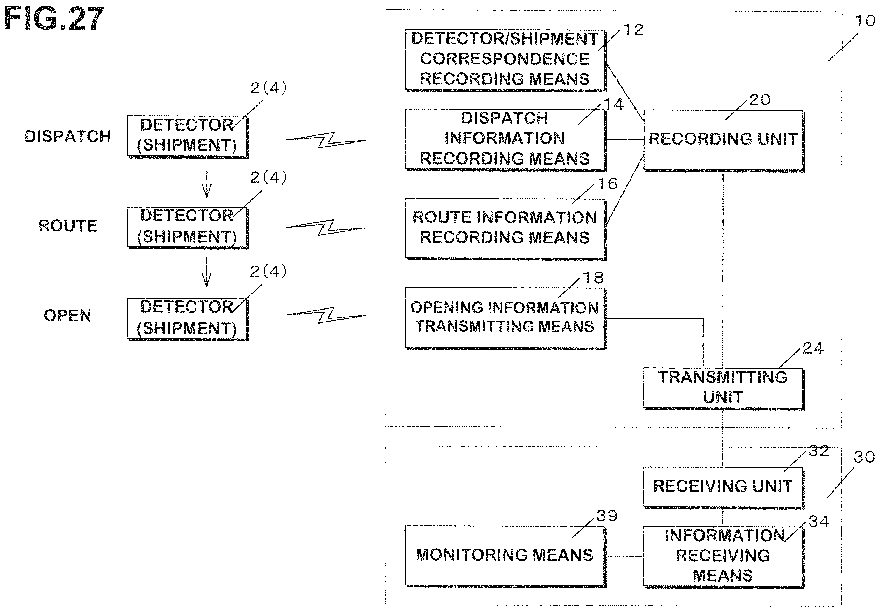

FIG. 27 illustrates a functional configuration of an unauthorized opening monitoring system according to a fourth embodiment. This system monitors whether unauthorized opening of the shipment 4 occurs during the transportation.

Detector/shipment correspondence recording means 12 of a server device 10 associates an identification code of a detector 2 attached to each of the shipments 4 with an identification code for identifying the respective shipment, and records the identification codes in a recording unit 20.

When this shipment 4 is dispatched, a dispatch input is given to the detector 2. Dispatch information recording means 14 acquires a date and time, a location of the detector 2, and the identification codes at the time when the dispatch input is given, and records the information as dispatch information in the recording unit 20.

In regard to the shipment 4 that has been dispatched and is on a delivery route, route information recording means 16 acquires the date and time, the location of the detector 2, and the identification codes at predetermined intervals, and records the information as route information in the recording unit 20.

When the shipment 4 arrives at a recipient, and the recipient opens the shipment 4, an opening input is given to the detector 2. For example, the opening input is given to the detector 2 when a circuit is disconnected or switched on by opening a bag or a box that accommodates the shipment 4. Opening information recording means 18 acquires a date and time, the location of the detector 2, and the identification codes at the time when the opening input is given, and transmits these pieces of information as the opening information to the terminal device 30 by the transmitting unit 24. At this time, the dispatch information and the route information may be transmitted together.

Information receiving means 34 of the terminal device 30 receives these pieces of the dispatch information, the route information, and the opening information by a receiving unit 32. Monitoring means 39 determines whether a distance between a location of the recipient, which is recorded in the terminal device 30 in advance, and the location of the detector 2 at the time of opening, which is included in the opening information, falls within a predetermined distance (for example, within 50 meters).

When the above distance falls within the predetermined distance, it is determined that the original recipient has received the shipment 4, and a warning is not issued. When the above distance is longer than the predetermined distance, a warning (voice output, display, mailing, or the like) that the unauthorized opening has occurred is issued.

### 4.2 System Configuration and Hardware Configuration

A system configuration and a hardware configuration are the same as those in the first embodiment. In this embodiment, a detection sheet body 210 is affixed to a portion to be opened when the shipment is shipped to the recipient. In this way, when the unauthorized opening has occurred on the route, the unauthorized opening can be detected by using the location information, and the warning can be issued.

### 4.3 Monitoring Processing

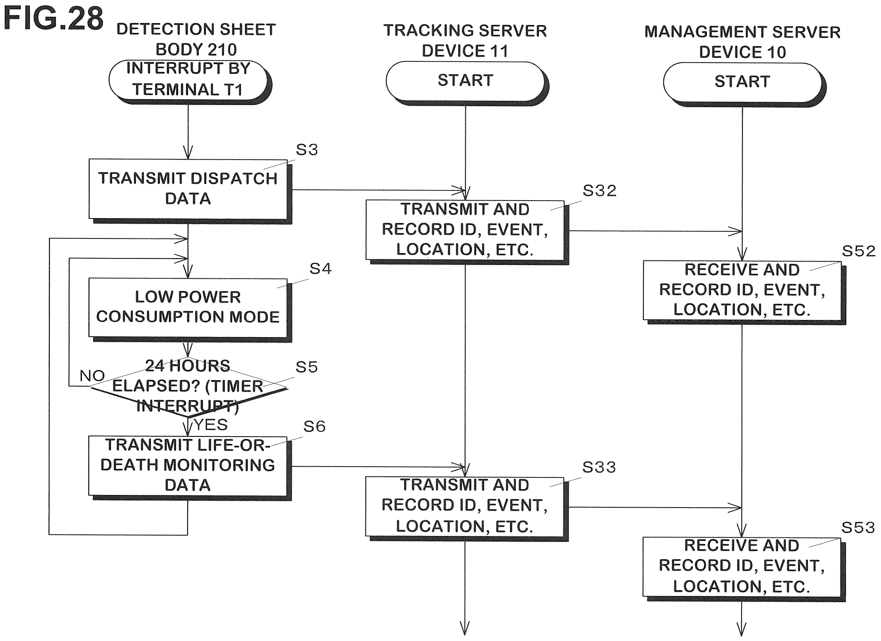

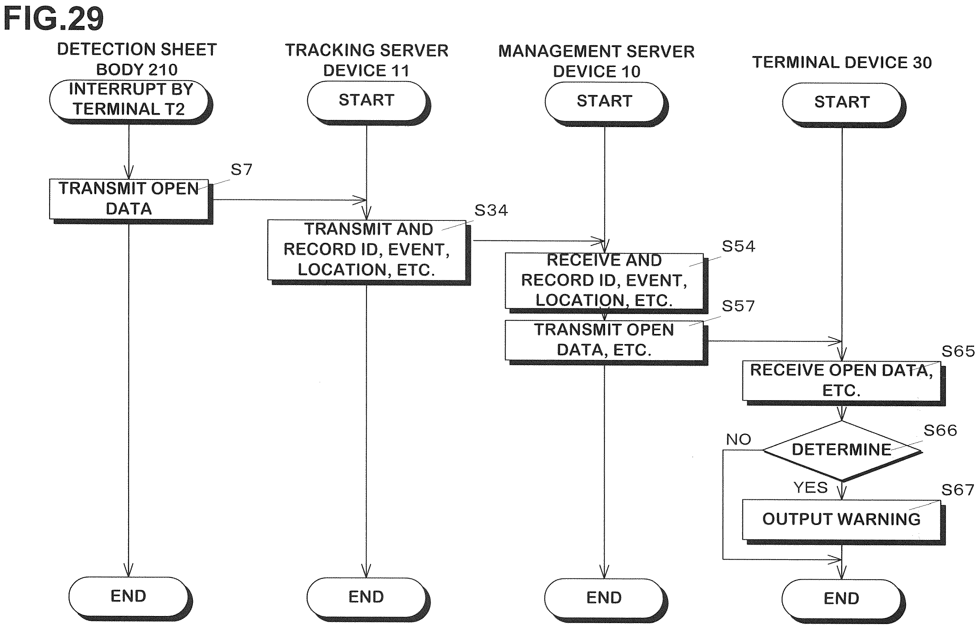

FIG. 28 and FIG. 29 illustrate a flowchart of monitoring processing. FIG. 28 illustrates the same processing as that in the first embodiment and the like. However, a user who uses this system (may be any of a dispatcher, the recipient, a carrier, or the like of the shipment) associates a location (latitude and longitude) of the recipient with a shipment identification code of the shipment 4 or an identification code of the detection sheet body 210 attached to the shipment, and records the location of the recipient in the terminal device 30. The location of the recipient may be the latitude and the longitude converted on the basis of an address.

When detecting opening, as illustrated in FIG. 29, the management server device 10 transmits the shipping data, the route data, and the opening data to the terminal device 30 (step S57). In this embodiment, all of the shipping data, the route data, and the opening data is transmitted. However, at least the opening data may be transmitted.

The terminal device 30 receives these pieces of the data (step S65). The terminal device 30 determines whether a distance between the location of the detection sheet body 210 at the time of opening, which is included in the opening data, and the location of the recipient, which is recorded in advance, falls within a predetermined distance (step S66).

When the above distance falls within the predetermined distance, it is determined that unauthorized opening has not occurred and the recipient has received the shipment 4, and the warning is not issued. However, when the above distance exceeds the predetermined distance, it is determined that unauthorized opening has occurred and the warning (voice, text output, transmission of a warning e-mail, or the like) is output.

### 4.4 Modified Examples

(1) In the above embodiment, when the location of the recipient matches the location where the shipment is opened, the warning is not issued. However, there is a possibility that someone other than the recipient may open the shipment at the location of the recipient. When the warning is issued also in such a case, in addition to or instead of the determination on warning described above, as in the third embodiment, the smartphone of the recipient may be registered in advance, and the terminal device 30 or the smartphone may determine whether the location where the shipment is opened and a location of the smartphone match (within a predetermined range).
(2) In the above embodiment, the terminal device 30 makes the determination and outputs the warning. However, in order to allow the user to make the determination, the opening information (particularly, the location where the shipment is opened) may simply be shown on a display or the like.
(3) In the above embodiment, the terminal device 30 includes the monitoring means 39. However, the management server device 10 may include the monitoring means 39 and transmit the warning based on the determination result to the terminal device 30. In this case, the location of the recipient may be registered in the management server device 10.

In addition, the monitoring device that executes the shipping processing, the route processing, the opening processing, and the monitoring processing may be constructed not as the server device but as the normal PC.

(5) The modified examples described above can be implemented in combination with each other and can also be implemented with other embodiments.

## Claims

1. A system for analyzing distribution and use of a shipped product, the system comprising:
a server device; and
a terminal device, wherein
the server device includes:
detector/product correspondence recording means that associates an identification code of a detector attached to the product with an identification code of the product and records the identification codes in a recording unit;
shipping information recording means that detects and associates a location of the detector, to which a shipping input is given at the time of shipping the product, with a date and time and the identification code of the detector, and records these pieces of information as shipping information in the recording unit;
route information recording means that detects a location of the detector, which is attached to the product, on the basis of a signal from the detector after shipping, associates the location of the detector with a date and time and the identification code of the detector, and records these pieces of information as route information in the recording unit;
usage information recording means that detects a location of the detector, to which a usage input is given, at the time of using the product, associates the location of the detector with a date and time and the identification code, and records these pieces of information as usage information in the recording unit; and
information transmitting means that transmits, to the terminal device, the shipping information, the route information, and the usage information recorded in the recording unit, and
the terminal device includes:
information receiving means that receives the shipping information, the route information, and the usage information transmitted from the server device by a receiving unit; and
analyzing means that calculates a time period from the shipping date and time to the usage date and time, the number of the products on a distribution route, or the number of the products used by a user on the basis of the shipping information, the route information, and the usage information received from the server device.

2. A terminal device for analyzing distribution and use of a shipped product, the terminal device comprising:
shipping information acquiring means that acquires shipping information, which is recorded by detecting and associating a location of a detector, to which a shipping input is given at the time of shipping the product, with a date and time and an identification code of the detector;
route information acquiring means that acquires route information, which is recorded by detecting a location of the detector, which is attached to the product, on the basis of a signal from the detector after shipping, and associating the location of the detector with a date and time and the identification code of the detector;
usage information acquiring means that acquires usage information, which is recorded by detecting a location of the detector, to which a usage input is given, at the time of using the product, and associating the location of the detector with a date and time and the identification code; and
analyzing means that calculates a time period from the shipping date and time to the usage date and time, the number of the products on a distribution route, or the number of the products used by a user on the basis of the shipping information, the route information, and the usage information.

3. The terminal device according to claim 2, wherein
the analyzing means calculates a production plan or a shipping plan of the product on the basis of the time period from the shipping date and time to the usage date and time, the number of the products on the distribution route, or the number of the products used by the user.

4. The terminal device according to claim 2, wherein
the analyzing means calculates a scheduled advertising volume of the product per region on the basis of the number of the usage, which is acquired by collecting locations of usage by the users per region.

5. The terminal device according to claim 2 being configured to:
include a detector, which differs from the detector attached to the product and is attached to a container accommodating a plurality of the products;
starts tracking processing at the time of shipping at which the shipping input is given to the detector attached to the container accommodating the plurality of the products; and
start the tracking processing by the detector attached to the product when the container accommodating the plurality of the products is opened.

6. A terminal program for realizing a terminal device for analyzing distribution and use of a shipped product by a computer, the terminal program causing the computer to function as:
shipping information acquiring means that acquires shipping information, which is recorded by detecting a location of a detector, to which a shipping input is given at the time of shipping the product, on the basis of a signal from the detector and associating the location of the detector with a date and time and an identification code of the detector;
route information acquiring means that acquires route information, which is recorded by detecting a location of the detector, which is attached to the product, on the basis of the signal from the detector after shipping, and associating the location of the detector with a date and time and the identification code of the detector;
usage information acquiring means that acquires usage information, which is recorded by detecting a location of the detector, to which a usage input is given, at the time of using the product, and associating the location of the detector with a date and time and the identification code; and
analyzing means that calculates a time period from the shipping date and time to the usage date and time, the number of the products on a distribution route, or the number of the products used by a user on the basis of the shipping information, the route information, and the usage information.

7. The terminal program according to claim 6, wherein
the analyzing means calculates a production plan or a shipping plan of the product on the basis of the time period from the shipping date and time to the usage date and time, the number of the products on the distribution route, or the number of the products used by the user.

8. The terminal program according to claim 6, wherein
the analyzing means calculates a scheduled advertising volume of the product per region on the basis of the number of the usage, which is acquired by collecting locations of usage by the users per region.

9. The terminal program according to claim 6 being configured to:
include a detector, which differs from the detector attached to the product and is attached to a container accommodating a plurality of the products;
starts tracking processing at the time of shipping at which the shipping input is given to the detector attached to the container accommodating the plurality of the products; and
start the tracking processing by the detector attached to the product when the container accommodating the plurality of the products is opened.

10. A server device for analyzing distribution and use of a shipped product, the server device comprising:
detector/product correspondence recording means that associates an identification code of a detector attached to the product with an identification code of the product and records the identification codes in a recording unit;
shipping information recording means that detects a location of the detector, to which a shipping input is given at the time of shipping the product, on the basis of a signal from the detector, associates the location of the detector with a date and time and the identification code of the detector, and records these pieces of information as shipping information in a recording unit;
route information recording means that detects a location of the detector, which is attached to the product, on the basis of the signal from the detector after shipping, associates the location of the detector with a date and time and the identification code of the detector, and records these pieces of information as route information in the recording unit;
usage information recording means that detects a location of the detector, to which a usage input is given, at the time of using the product, associates the location of the detector with a date and time and the identification code, and records these pieces of information as usage information in the recording unit; and
information transmitting means that transmits the shipping information, the route information, and the usage information recorded in the recording unit by transmitting unit such that the terminal device can calculate a time period from the shipping date and time to the usage date and time, the number of the products on a distribution route, or the number of the products used by a user on the basis of the shipping information, the route information, and the usage information.

11. An analysis device for analyzing distribution and use of a shipped product, the analysis device comprising:
detector/product correspondence recording means that associates an identification code of a detector attached to each of the products or the plural products with an identification code of each of the products or identification codes of the plural products and records the identification codes in a recording unit;
shipping information recording means that detects a location of the detector, to which a shipping input is given at the time of shipping the product, on the basis of a signal from the detector, associates the location of the detector with a date and time and the identification code of the detector, and records these pieces of information as shipping information in a recording unit;
route information recording means that detects a location of the detector, which is attached to the product, on the basis of the signal from the detector after shipping, associates the location of the detector with a date and time and the identification code of the detector, and records these pieces of information as route information in the recording unit;
usage information recording means that detects a location of the detector, to which a usage input is given, at the time of using the product, associates the location of the detector with a date and time and the identification code, and records these pieces of information as usage information in the recording unit; and
analyzing means that calculates, as analysis information, a time period from the shipping date and time to the usage date and time, the number of the products on a distribution route, or the number of the products used by a user on the basis of the shipping information, the route information, and the usage information.

12. The analysis device according to claim 11, wherein
the analyzing means calculates a production plan or a shipping plan of the product on the basis of the time period from the shipping date and time to the usage date and time, the number of the products on the distribution route, or the number of the products used by the user.

13. The analysis device according to claim 11, wherein
the analyzing means calculates a scheduled advertising volume of the product per region on the basis of the number of the usage, which is acquired by collecting locations of usage by the users per region.

14. The analysis device according to claim 11 being configured to:
include a detector, which differs from the detector attached to the product and is attached to a container accommodating a plurality of the products;
starts tracking processing at the time of shipping at which the shipping input is given to the detector attached to the container accommodating the plurality of the products; and
start the tracking processing by the detector attached to the product when the container accommodating the plurality of the products is opened.

15. A system for measuring an information transmission effect of a sealed letter that encloses information, the system comprising:
a server device; and
a terminal device, wherein
the server device includes:
detector/information correspondence recording means that associates an identification code of a detector attached to the sealed letter with an identification code of the sealed letter and records the identification codes in a recording unit;
dispatch information recording means that detects a location of the detector on the basis of a signal from the detector, which is activated at the time of dispatching the sealed letter, associates the location of the detector with a date and time and the identification code of the detector, and records these pieces of information as dispatch information in the recording unit;
opening information recording means that detects a location of the detector, to which an opening input is given, at the time of opening the sealed letter, associates the location of the detector with a date and time and the identification code of the detector, and records these pieces of information as opening information in the recording unit; and
information transmitting means that transmits the shipping information and the opening information recorded in the recording unit by a transmitting unit, and
the terminal device includes:
presence or absence of reaction acquiring means that acquires presence or absence of a reaction to the information enclosed in the sealed letter;
information receiving means that receives the shipping information and the opening information transmitted from the server device by a receiving unit; and
effect measuring means that calculates a ratio of the number of the opened sealed letters to the number of the mailed sealed letters or a ratio of the presence of the reaction on the basis of the dispatch information and the opening information received from the server device and the presence or the absence of the reaction acquired by the presence or absence of reaction acquiring means.

16. A terminal device for measuring an information transmission effect of a sealed letter that encloses information, the terminal device comprising:
dispatch information acquiring means that acquires dispatch information, which is recorded by detecting a location of a detector on the basis of a signal from the detector, which is activated at the time of dispatching the sealed letter, and associating the location of the detector with a date and time and an identification code of the detector;
opening information acquiring means that acquires opening information, which is recorded by detecting a location of the detector, to which an opening input is given, at the time of opening the sealed letter, and associating the location of the detector with a date and time and the identification code of the detector;
presence or absence of reaction acquiring means that acquires presence or absence of a reaction to the information enclosed in the sealed letter; and
effect measuring means that calculates a ratio of the number of the opened sealed letters to the number of the mailed sealed letters or a ratio of the presence of the reaction on the basis of the dispatch information and the opening information as well as the presence or the absence of the reaction acquired by the presence or absence of reaction acquiring means.

17. The terminal device according to claim 16, wherein
the effect measuring means calculates effect information per region, which is indicated by a location where the sealed letter is opened.

18. A terminal program for realizing a terminal device that measures an information transmission effect of a sealed letter enclosing information by a computer, the terminal program causing the computer to function as:
dispatch information acquiring means that acquires dispatch information, which is recorded by detecting a location of a detector on the basis of a signal from the detector, which is activated at the time of dispatching the sealed letter, and associating the location of the detector with a date and time and an identification code of the detector;
opening information acquiring means that acquires opening information, which is recorded by detecting a location of the detector, to which an opening input is given, at the time of opening the sealed letter, and associating the location of the detector with a date and time and the identification code of the detector;
presence or absence of reaction acquiring means that acquires presence or absence of a reaction to the information enclosed in the sealed letter; and
effect measuring means that calculates a ratio of the number of the opened sealed letters to the number of the mailed sealed letters or a ratio of the presence of the reaction on the basis of the dispatch information and the opening information as well as the presence or the absence of the reaction acquired by the presence or absence of reaction acquiring means.

19. The terminal program according to claim 18, wherein
the effect measuring means calculates effect information per region, which is indicated by a location where the sealed letter is opened.

20. A server device for measuring an information transmission effect of a sealed letter that encloses information, the server device comprising:
detector/information correspondence recording means that associates an identification code of a detector attached to the sealed letter with an identification code of the sealed letter and records the identification codes in a recording unit;
dispatch information recording means that detects a location of the detector on the basis of a signal from the detector, which is activated at the time of dispatching the sealed letter, associates the location of the detector with a date and time and the identification code of the detector, and records these pieces of information as dispatch information in the recording unit;
opening information recording means that detects a location of the detector, to which an opening input is given, at the time of opening the sealed letter, associates the location of the detector with a date and time and the identification code of the detector, and records these pieces of information as opening information in the recording unit; and
information transmitting means that transmits the dispatch information and the opening information recorded in the recording unit by a transmitting unit in order to calculate, as effect information, a ratio of the number of the opened sealed letters to the number of the mailed sealed letters and a ratio of the presence of the reaction to the number of the opened sealed letters on the basis of the dispatch information, the opening information, and the presence or the absence of the reaction.

21. An analysis device for measuring an information transmission effect of a sealed letter that encloses information, the analysis device comprising:
detector/information correspondence recording means that associates an identification code of a detector attached to the sealed letter with an identification code of the sealed letter and records the identification codes in a recording unit;
dispatch information recording means that detects a location of the detector on the basis of a signal from the detector, which is activated at the time of dispatching the sealed letter, associates the location of the detector with a date and time and the identification code of the detector, and records these pieces of information as dispatch information in the recording unit;
opening information recording means that detects a location of the detector, to which an opening input is given, at the time of opening the sealed letter, associates the location of the detector with a date and time and the identification code of the detector, and records these pieces of information as opening information in the recording unit;
presence or absence of reaction acquiring means that acquires presence or absence of a reaction to the information enclosed in the sealed letter; and
effect measuring means that calculates, as effect information, a ratio of the number of the opened sealed letters to the number of the mailed sealed letters or a ratio of the presence of the reaction to the number of the opened sealed letters on the basis of the dispatch information, the opening information, and the presence or the absence of the reaction.

22. The analysis device according to claim 21, wherein
the effect measuring means calculates the effect information per region, which is indicated by a location where the sealed letter is opened.

23. A monitoring system for monitoring unauthorized intrusion into a house, the monitoring system comprising:
a server device; and
a mobile terminal device, wherein
the server device includes:
start information acquiring means that acquires vacant house start information including an identification code of a detector attached to an opened/closed body and activated when a user leaves the house; and
opening information transmitting means that acquires the identification code and a location of the detector detecting that the opened/closed body has been opened, and transmits these pieces of information as opening information to the mobile terminal device, and
the mobile terminal device includes:
receiving means that receives the opening information from the server device; and
abnormality notifying means that determines whether the location of the detector as a target of the opening information and a location of the mobile terminal device at the time of the opening information are within a predetermined range, and makes an abnormality notification when the locations are not within the predetermined range.

24. A mobile terminal device for monitoring unauthorized intrusion into a house, the mobile terminal device comprising:
opening information acquiring means that acquires, as opening information, an identification code and a location of a detector detecting that an opened/closed body, to which the detector activated at the time when a user leaves the house is attached, has been opened; and
abnormality notifying means that determines whether the location of the detector as a target of the opening information and a location of the mobile terminal device at the time of the opening information are within a predetermined range, and makes an abnormality notification when the locations are not within the predetermined range.

25. A terminal program for realizing a mobile terminal device for monitoring unauthorized intrusion into a house by a computer, the terminal program causing the computer to function as:
opening information acquiring means that acquires, as opening information, an identification code and a location of a detector detecting that an opened/closed body, to which the detector activated at the time when a user leaves the house is attached, has been opened; and
abnormality notifying means that determines whether the location of the detector as a target of the opening information and a location of the mobile terminal device at the time of the opening information are within a predetermined range, and makes an abnormality notification when the locations are not within the predetermined range.

26. A server device for monitoring unauthorized intrusion into a house, the server device comprising:
start information acquiring means that acquires vacant house start information including an identification code of a detector attached to an opened/closed body and activated when a user leaves the house; and
opening information transmitting means in a mobile terminal device, the opening information transmitting means determining whether a location of the detector as a target of the opening information and a location of the mobile terminal device at the time of the opening information are within a predetermined range, acquires the identification code and the location of the detector detecting that the opened/closed body has been opened in order to make an abnormality notification when the locations are not within the predetermined range, and transmits these pieces of information as the opening information to the mobile terminal device.

27. A monitoring device for monitoring unauthorized intrusion into a house, the monitoring device comprising:
start information acquiring means that acquires vacant house start information including an identification code of a detector attached to an opened/closed body and activated when a user leaves the house;
opening information transmitting means that acquires the identification code and a location of the detector detecting that the opened/closed body has been opened, and transmits these pieces of information as opening information to the mobile terminal device; and
abnormality notifying means that determines whether the location of the detector as a target of the opening information and a location of the mobile terminal device at the time of the opening information are within a predetermined range, and transmits an abnormality notification to the mobile terminal device when the locations are not within the predetermined range.

28. A system for monitoring unauthorized opening of a shipment, the system comprising:
a server device; and
a terminal device, wherein
the server device includes:
detector/shipment correspondence recording means that associates an identification code of a detector attached to a portion to be opened of the shipment with an identification code of the product and records the identification codes in a recording unit;
dispatch information recording means that detects a location of the detector on the basis of a signal from the detector, which is activated at the time of dispatching the shipment, associates the location of the detector with a date and time and the identification code of the detector, and records these pieces of information as dispatch information in the recording unit; and
information transmitting means that transmits opening information to the terminal device by a transmitting unit when receiving the opening information including a location of the detector detecting that the portion to be opened of the shipment has been opened, the date and time, and the identification code of the detector, and
the terminal device includes:
monitoring means that outputs a location at the time of opening on the basis of the opening information received from the server device in order to determine whether the unauthorized opening has occurred.

29. A terminal device for monitoring unauthorized opening of a shipment, the terminal device comprising:
dispatch information receiving means that acquires dispatch information, which is recorded by detecting a location of a detector on the basis of a signal from the detector, which is activated at the time of dispatching the shipment, and associating the location of the detector with a date and time and an identification code of the detector;
opening information acquiring means that acquires opening information including a location of the detector detecting that a portion to be opened of the shipment has been opened, the date and time, and the identification code of the detector; and
monitoring means that outputs a location at the time of opening on the basis of the dispatch information and the opening information received from the server device in order to determine whether the unauthorized opening has occurred.

30. The terminal device according to claim 29, wherein
the monitoring means outputs a warning of the unauthorized opening when a distance between a scheduled shipment receiving location, which is recorded in advance, and the location where the opening has been detected is longer than a predetermined distance.

31. A terminal program for realizing a terminal device for monitoring unauthorized opening of a shipment by a computer, the terminal program causing the computer to function as:
dispatch information receiving means that acquires dispatch information, which is recorded by detecting a location of a detector on the basis of a signal from the detector, which is activated at the time of dispatching the shipment, and associating the location of the detector with a date and time and an identification code of the detector;
opening information acquiring means that acquires opening information including a location of the detector detecting that a portion to be opened of the shipment has been opened, the date and time, and the identification code of the detector; and
monitoring means that outputs a location at the time of opening on the basis of the dispatch information and the opening information received from the server device in order to determine whether the unauthorized opening has occurred.

32. The terminal program according to claim 31, wherein
the monitoring means outputs a warning of the unauthorized opening when a distance between a scheduled shipment receiving location, which is recorded in advance, and the location where the opening has been detected is longer than a predetermined distance.

33. A server device for monitoring unauthorized opening of a shipment, the server device comprising:
detector/shipment correspondence recording means that associates an identification code of a detector attached to a portion to be opened of the shipment with an identification code of the product and records the identification codes in a recording unit;
dispatch information recording means that detects a location of the detector on the basis of a signal from the detector, which is activated at the time of dispatching the shipment, associates the location of the detector with a date and time and the identification code of the detector, and records these pieces of information as dispatch information in the recording unit; and
information transmitting means that transmits opening information to the terminal device by a transmitting unit when receiving the opening information including a location of the detector detecting that the portion to be opened of the shipment has been opened, the date and time, and the identification code of the detector in order to determine whether the unauthorized opening has occurred on the basis of the opening information.

34. A monitoring device for monitoring unauthorized opening of a shipment, the monitoring device comprising:
detector/shipment correspondence recording means that associates an identification code of a detector attached to a portion to be opened of the shipment with an identification code of the shipment and records the identification codes in a recording unit;
dispatch information recording means that detects a location of the detector on the basis of a signal from the detector, which is activated at the time of dispatching the shipment, associates the location of the detector with a date and time and the identification code of the detector, and records these pieces of information as dispatch information in the recording unit;
information transmitting means that transmits opening information to the terminal device by a transmitting unit when receiving the opening information including a location of the detector detecting that the portion to be opened of the shipment has been opened, the date and time, and the identification code of the detector; and
monitoring means that outputs a location at the time of opening on the basis of the dispatch information and the opening information received from the server device in order to determine whether the unauthorized opening has occurred.

35. The monitoring device according to claim 34, wherein
the monitoring means outputs a warning of the unauthorized opening when a distance between a scheduled shipment receiving location, which is recorded in advance, and the location where the opening has been detected is longer than a predetermined distance.
